# EUROPEAN PATENT APPLICATION

(11) **EP 2 242 270 A1**
(43) Date of publication of application: **20.10.2010**
(21) Application number: 09710743.7
(22) Date of filing: 13.02.2009
(51) Int. Cl.: H04N 7/173

(54) **BROADCAST SYSTEM, TRANSMISSION DEVICE, TRANSMISSION METHOD, RECEPTION DEVICE, RECEPTION METHOD, PRESENTATION DEVICE, PRESENTATION METHOD, PROGRAM, AND RECORDING MEDIUM**

(30) Priority: 14.02.2008 JP 2008032674
(71) Applicant: Sony Corporation, Tokyo 108-0075 (JP)
(72) Inventor: KONDO, Tetsujiro, Tokyo 108-0075 (JP)
(74) Representative: Körber, Martin Hans
(86) International application number: PCT/JP2009/052364
(87) International publication number: WO 2009/101998

(57) **Abstract**

The present invention relates to a broadcast system, transmission device, transmitting method, reception device, receiving method, presentation device, presentation method, program, and storage medium, whereby presentation of content can be flexibly performed.

A transmission/reception system is configured of a transmission device 12 to transmit data, and a reception device 13 to receive data. The transmission device 12 transmits object information for each object used for content. On the other hand, the reception device 13 receives the object information from the transmission device 12, and generates content based on the object information. The present invention can be applied to a broadcast system for performing broadcast and so forth, for example.

## Description

### Technical Field

The present invention relates to a broadcast system, transmission device, transmitting method, reception device, receiving method, presentation device, presentation method, program, and storage medium, and particularly relates to a broadcast system, transmission device, transmitting method, reception device, receiving method, presentation device, presentation method, program, and storage medium whereby presentation of content such as images, for example, can be flexibly performed.

### Background Art

With a current broadcast system for analog broadcast and digital broadcast for example, at the broadcast station which is the transmission side, images and audio serving as raw data are edited by a content creator that creates content serving as a television program, and the content made up of the images and audio after such editing is broadcast as a program.

On the other hand, in homes for example, which are the receiving side, images are displayed and audio is output of the content which is the program from the broadcast station, by a TV (television receiver) or the like.

Note that a broadcast system has been proposed wherein raw data of multiple images having different perspectives is broadcast from the transmission side, enabling a user at the receiving side to select an image from an arbitrary perspective (see Patent Document 1, for example).

Patent Document 1: Japanese Unexamined Patent Application Publication No. 2006-217662

### Disclosure of Invention

### Technical Problem

As described above, content after editing, which has been subjected to editing at the broadcast station, is presented (display, output, etc) on the receiving side TV.

Accordingly, the user observes (views/listens to) the content that a content creator has edited at the broadcast station with a certain intent.

Consequently, even if the content includes an object which the user dislikes for example, the user watches the object.

Therefore, requests have been made to enable a user to perform processing such that the user does not have to watch the disliked object and the user can delete such an object from the content.

On the other hand, for example, in a virtual space such as Second Life, the user can process content provided as the virtual space, or more correctly, objects making up content provided as the virtual space. That is to say, a user can to build a house to his/her liking, for example.

However, with a virtual space such as Second Life, even if each user can process the content, the content after being processed is shared between all users.

Accordingly, even if the user does not like the content which another user has processed, the user has to watch the content.

Also, in an above-described broadcast system or virtual space, the content which the user can view, or rather the objects making up the content which the user can view, is only images and audio which can be observed by seeing and hearing, and content other than observing by the senses of seeing and hearing, i.e. for example enjoying (smelling) the odors from cooking, has been difficult.

Further, with a broadcast system or virtual space, as described above, the user observes content with the two senses of seeing and hearing, but there has been demand for presentation of content which can be observed with three or more senses.

Also, with the broadcast system according to Japanese Patent Document 1, the information unique to individual objects which have been separated into separate objects are not broadcast, giving the user little freedom to process the content.

The present invention has been made in light of such a situation, and accordingly it is an object thereof to enable presenting of content in a flexible manner, so that the user can observe user-specific content, the user can observe content with a sense other than seeing and hearing, and the user can observe the content with three or more senses, for example.

### Technical Solution

A broadcast system according to a first aspect of the present invention is a broadcast system including a transmission device to transmit data and a reception device to receive the data, wherein the transmission device includes transmission means to transmit object information for each object used for content, as broadcast data, and wherein the reception device includes generating means to generate content based on the object information.

With the first aspect above, at the transmission device, object information for each object used for content is transmitted as broadcast data, and at the reception device, contents are generated based on the object information.

A transmission device or program according to a second aspect of the present invention is a transmission device or a program causing a computer to function as a transmission device, to transmit data, the transmission device making up a broadcast system along with a reception device to receive the data, the transmission device including transmission means to transmit object information for each object used for content, as broadcast data.

A transmission method according to the second aspect of the present invention is a transmission method for a transmission device to transmit data, making up a broadcast system along with a reception device to receive the data, the transmission method including a step for transmitting object information for each object used for content, as broadcast data.

With the second aspect above, object information for each object used for content is transmitted as broadcast data.

A reception device or program according to a third aspect of the present invention is a reception device or a program causing a computer to function as a reception device, to receive data, the reception device making up a broadcast system along with a transmission device to transmit the data, the reception device including generating means to generate content based on object information, in the case that the transmission device transmits object information for each object used for content as broadcast data.

A reception method according to the third aspect of the present invention is a reception method for a reception device to receive data, making up a broadcast system along with a transmission device to transmit the data, the reception method including a step of the reception device generating content based on object information, in the case that the transmission device transmits object information for each object used for content as broadcast data.

With the third aspect above, contents are generated based on object information.

A presentation device or program according to a fourth aspect of the present invention is a presentation device or a program causing a computer to function as a presentation device to present content generated based on data received from a reception device to receive data, making up a broadcast system along with a transmission device to transmit the data, the presentation device including presenting means to present content generated based on object information, in the case that the transmission device transmits object information for each object used for content as broadcast data.

A presentation method according to the fourth aspect is a presentation method for a presentation device to present content generated based on data received by a reception device to receive the data, making up a broadcast system along with a transmission device to transmit the data, the presentation method including a step of the presentation device presenting content generated based on object information, in the case of the transmission device transmitting object information for each object used for content as broadcast data.

With the fourth aspect above, contents generated based on object information are presented.

Note that the program can be provided by transferring via a transfer medium, or being recorded in a recording medium.

Also, the transmission device, reception device, and presentation device, may be independent devices, or may be an internal block making up one device.

### Advantageous Effects

According to the first through fourth aspects of the present invention, content presentation can be performed in a flexible manner.

### Brief Description of Drawings

[Fig. 1] Fig. 1 is a block diagram of a configuration example according to an embodiment of a transmitting/receiving system to which the present invention has been applied.
[Fig. 2] Fig. 2 is a block diagram illustrating a configuration example of a sensing device 11.
[Fig. 3] Fig. 3 is a diagram illustrating a first mode of sensing with the sensing device 11.
[Fig. 4] Fig. 4 is a diagram illustrating a second mode of sensing with the sensing device 11.
[Fig. 5] Fig. 5 is a diagram illustrating a third mode of sensing with the sensing device 11.
[Fig. 6] Fig. 6 is a block diagram illustrating a configuration example of the transmission device 12.
[Fig. 7] Fig. 7 is a flowchart describing the processing of the transmission device 12.
[Fig. 8] Fig. 8 is a block diagram illustrating a configuration example of an object information generating unit 31.
[Fig. 9] Fig. 9 is a block diagram illustrating a configuration example of the image processing device finding a wire frame and texture information.
[Fig. 10] Fig. 10 is a block diagram illustrating a configuration example of a reception device 13.
[Fig. 11] Fig. 11 is a flowchart describing the processing of the reception device 13.
[Fig. 12] Fig. 12 is a block diagram illustrating a configuration example of a presentation device 14.
[Fig. 13] Fig. 13 is a block diagram illustrating a detailed configuration example of the presentation device 14.
[Fig. 14] Fig. 14 is a diagram schematically illustrating an example of positioning of devices making up a presentation unit 223.
[Fig. 15] Fig. 15 is a flowchart describing the processing of the presentation device 14.
[Fig. 16] Fig. 16 is a block diagram illustrating another detailed configuration example of the presentation device 14.
[Fig. 17] Fig. 17 is a diagram schematically illustrating a configuration example of the presentation device 14.
[Fig. 18] Fig. 18 is a perspective view schematically illustrating a configuration example of a half-sphere display.
[Fig. 19] Fig. 19 is a block diagram illustrating a configuration example of an embodiment of a computer to which the present invention has been applied.

### Explanation of Reference Numerals

11 sensing device, 12 transmission device, 13 reception device, 14 presentation device, 31 object information generating unit, 32 content default information generating unit, 33 transmission unit, 41 background object information generating unit, 42 physical object information generating unit, 43 ID appending unit, 201 transmission data receiving unit, 202 object information DB, 203 generating unit, 204 simulation unit, 205 presentation data generating unit, 206 command receiving unit, 207 processing information DB, 210 remote commander, 221 sensing unit, 222 presentation data receiving unit, 223 presentation unit, 231 movement mechanism, 251 screen, 252 image generating unit, 253 fish-eye lens, 261, 262 display unit, 301 bus, 302 CPU, 303 ROM, 304 RAM, 305 hard disk, 306 output unit, 307 input unit, 308 communication unit, 309 drive, 310 input/output interface, 311 removable recording medium

### Best Mode for Carrying Out the Invention

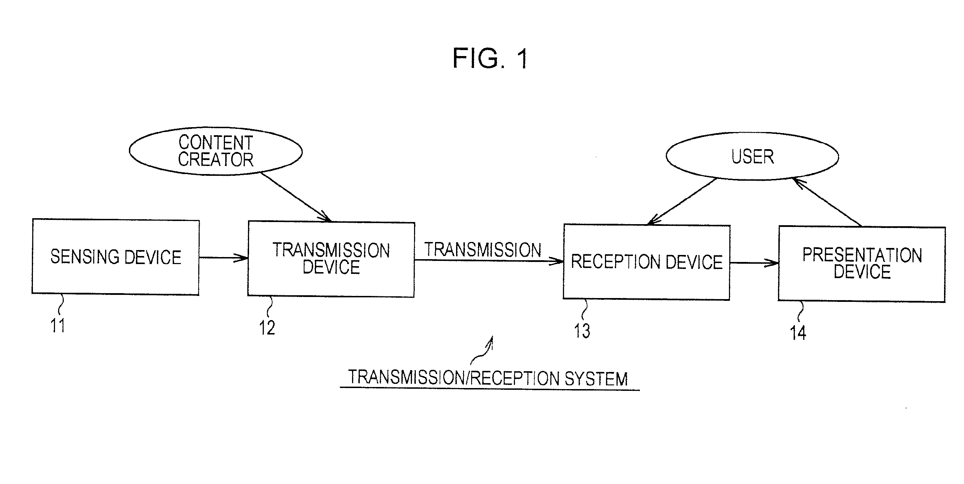

Fig. 1 shows a configuration example according to an embodiment of a transmitting/receiving system ("system" refers to a logical collection of multiple devices, regardless of whether or not the devices making up the system are within the same casing) to which the present invention has been applied.

In Fig. 1, the transmitting/receiving system is a broadcast system that broadcasts content serving as a program, for example, and is made up of a sensing device 11 and transmission device 12 as devices on the transmitting side and a reception device 13 and presentation device 14 as devices on the receiving side.

The sensing device 11 senses various types of objects making up content (employed for content), and supplies the data obtained as a result of such sensing to the transmission device 12.

The transmission device 12 generates various types of data (information) necessary for content display from the data from the sensing device 11, and transmits this as broadcast data for broadcasting.

Also, the transmission device 12 generates the content reflecting the intent of the content creator, i.e. data necessary for presentation of content after editing by the content creator, and transmits this as broadcast data.

The broadcast data is transmitted via a transfer medium such as terrestrial waves, satellite circuit, Internet, CATV (Cable Television) network, or the like, for example.

The reception device 13 receives the data transmitted from the transmission device 12, generates the presentation data for performing presentation with the presentation device 14 (presentation data to serve as content) from the data, and supplies this to the presentation device 14.

Note that the reception device 13 generates presentation data based on instructions from the user, as necessary.

The presentation device 14 performs presentation of content as to the user, according to the presentation data from the reception device 13.

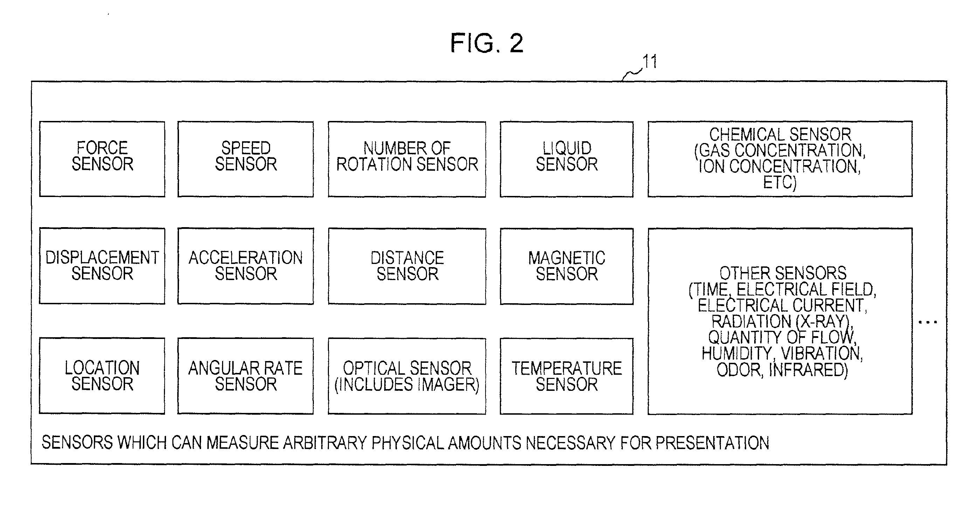

Fig. 2 is a diagram describing the sensing device 11 in Fig. 1.

The sensing device 11 can employ various types of sensors that sense arbitrary physical amounts used for presentation of content with the presentation device 14.

That is to say, the sensing device 11 can employ, for example, a force sensor to sense force, a speed sensor to sense speed, a number-of-rotations sensor to sense (measure) number of rotations, liquid sensor to sense liquid, chemical sensor to sense gas concentration, ion concentration, and the like, displacement sensor to sense (measure) displacement, acceleration sensor to sense acceleration, distance sensor to sense distance, magnetic sensor to sense magnetise, location sensor to sense location, angular rate sensor to sense angular rate, optical sensor to sense light, temperature sensor to sense temperature, and so forth.

Note that with the optical sensor, not only a sensor to perform detection of light or detection of brightness, but also an imager (camera) to perform photographing and output images is included.

Also, the sensing device 11 can employ, besides the above-described sensors, sensors to sense time, electrical fields, electric current, radiation (X-ray), quantity of flow, humidity, vibration, odor, infrared, sound (audio), and other physical quantities.

Next, a mode of sensing with the sensing device 11 will be described.

The sensing device 11 senses various types of objects used for content, as described above, and there are first, second, and third modes for the sensing mode.

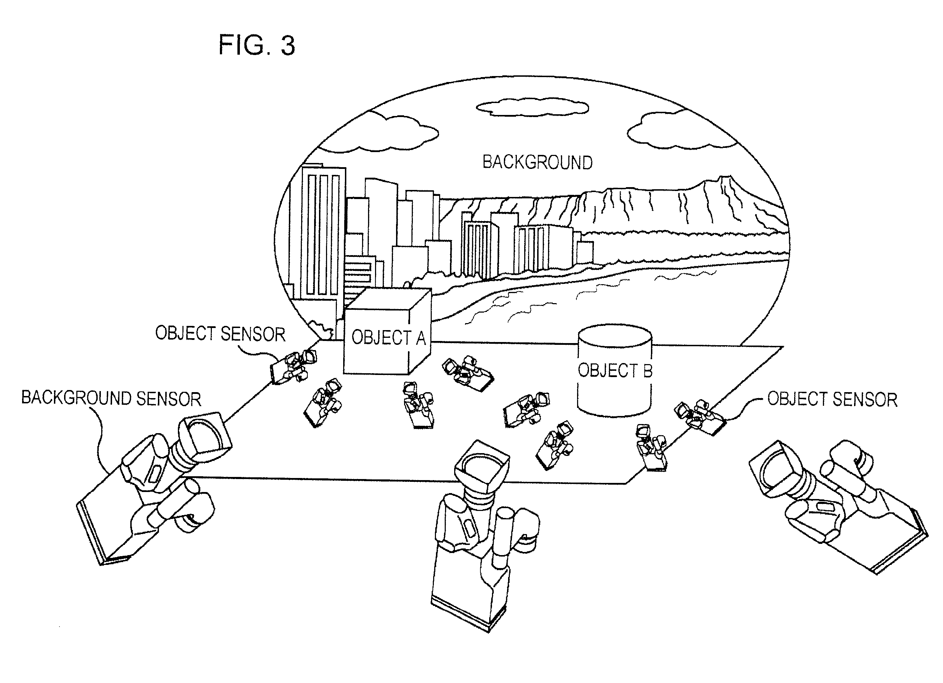

Fig. 3 shows a first mode of sensing with the sensing device 11.

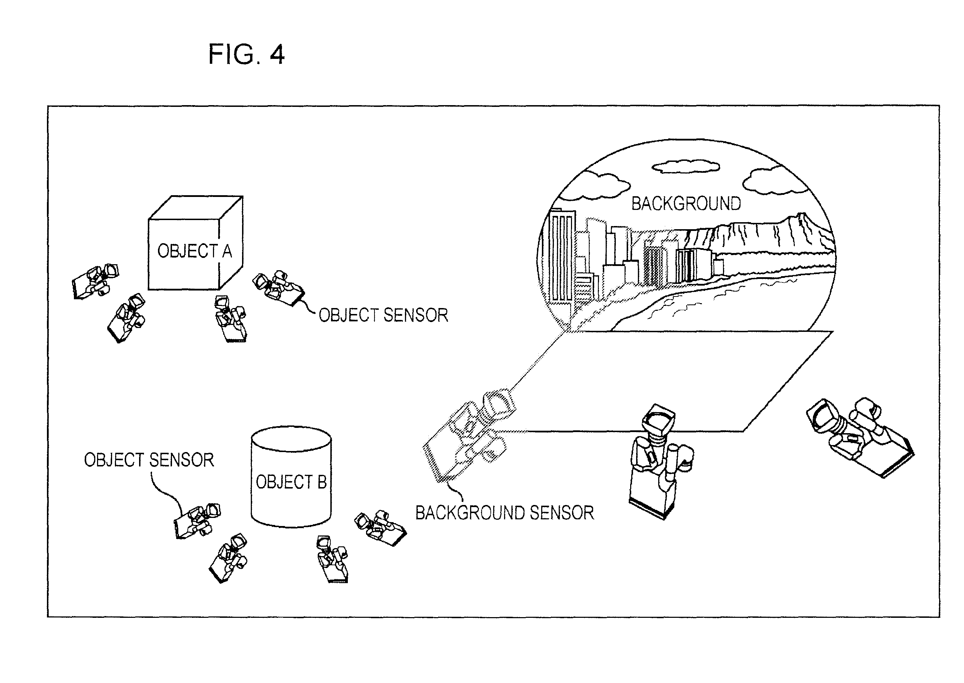

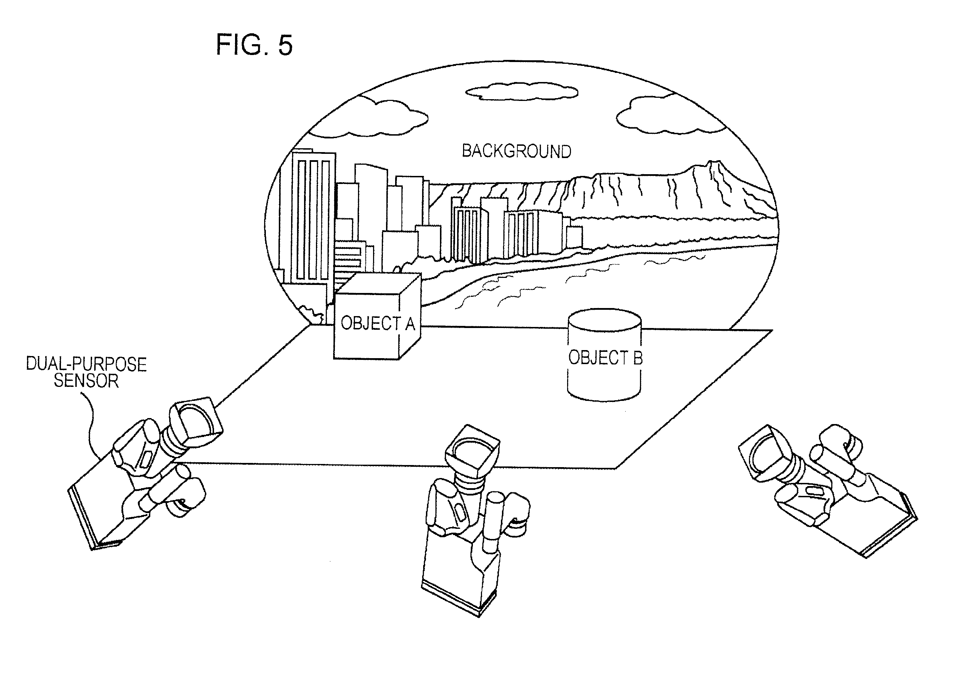

Note that in Fig. 3 (as with the later-described Fig. 4 and Fig. 5), object sensing is performed for content made up of an object serving as a background and two physical objects A and B which are objects other than the background (e.g. a person such as an actor, a bicycle, or other tangible entities).

Now, let us say that the background is one object for the entire background, and physical objects A and B are each one object for each of the physical objects A and B.

With the first embodiment, a background sensor which is a sensor to sense the object serving as the background and the physical object sensors which are sensors to sense each of the physical objects A and B are each individually prepared as a sensing device 11, whereby the background and each of the two physical objects A and B in the state of making up the content are simultaneously sensed.

That is to say, the background is sensed with the background sensor, the physical object A is sensed with a physical object sensor, and the physical object B is sensed with another physical object sensor.

Note that a camera to sense light and output images, a microphone to sense sound, a temperature sensor to sense temperature, a humidity sensor to sense humidity, an ion density sensor to sense ion density, an odor sensor to sense odor, a location sensor to sense location (e.g. GPS (Global Positioning System)), a distance sensor to sense distance, and the like, may be used for the background sensor.

Also, the above-described camera, microphone, temperature sensor, odor sensor, location sensor, and further a taste sensor to sense taste, angular rate sensor to sense angular rate, and a sensor to sense X-rays, and so forth may be used for the physical object sensor.

Now, multiple physical object sensors can be assigned to one object, whereby sensing of one object is performed with the multiple physical object sensors. The same is true for the background sensor also.

Note that positioning the multiple physical object sensors or background sensors in the case of sensing an object with multiple physical object sensors or background sensors can employ the camera positioning disclosed in Japanese Unexamined Patent Application Publication No. 2004-266511, for example.

Fig. 4 shows a second mode of sensing with the sensing device 11.

With the second mode, similar to the first mode in Fig. 3, a background sensor which is a sensor to sense the object serving as the background and the physical object sensors which are sensors to sense each of the physical objects A and B are each individually prepared as a sensing device 11, whereby the background and each of the two physical objects A and B used for the content are simultaneously sensed.

However, in the second mode, sensing of the background and the physical objects A and B is not performed in the state that the background and the physical objects A and B make up the content, but rather sensing is performed in the state of each of the background, physical object A, and physical object B being separate.

That is to say, for example, using an example on content wherein a racetrack stadium serves as the background and two cars serve as the physical objects A and B, in the first mode, in the state of the two cars serving as the physical objects A and B actually performing a car race at the racetrack stadium serving as the background, sensing is performed such as photographing the racetrack stadium serving as the background and the two cars serving as the physical objects A and B.

On the other hand, in the second mode, sensing is performed such as photographing the racetrack stadium in the state of a car race not being performed, and sensing of the car serving as physical object A is performed at a place and time unrelated to the sensing of the racetrack stadium. Sensing of the car serving as physical object B is also performed unrelated to sensing of the racetrack stadium and sensing of the object A.

Fig. 5 shows a third mode of sensing with the sensing device 11.

In the third mode, a sensor to sense the background, a sensor to sense the physical object A, and a sensor to sense the physical object B are used in combination.

A sensor which combines a sensor to sense the background, a sensor to sense the physical object A, and a sensor to sense the physical object B, is called a multi-purpose sensor.

With the multi-purpose sensor, sensing is performed in a state that the physical amounts of each of the background, physical object A, and physical object B are combined.

Note that the data obtained as a result of the sensing of physical amount with the sensing device 11 (hereafter, also referred to as "sensing information") is used to generate object information for each object with the transmission device 12, as described later.

When generating object information for each object, information has to be sensed for each object, whereby the physical amounts that are sensed with the multi-purpose sensor should be physical amounts wherein the sensing information output by the multi-purpose sensor can be separated into sensing information for each object.

For example, the images serving as sensing information that the camera outputs can be separated into images for each object by an object image extracting technique. Also, for example, the sound serving as sensing information that a microphone outputs can be separated into sounds for each object by a sound source separating technique. Accordingly, a camera or microphone can be used as a multi-purpose sensor.

On the other hand, in the case of sensing multiple objects with a sensor which senses X-rays, temperature, odors, and so forth, separating by object the sensing information that such sensor outputs is difficult.

Thus, for physical amounts which are difficult to separate into sensing information for each object, a sensor to sense the physical amount thereof should be prepared for each object and sensing performed.

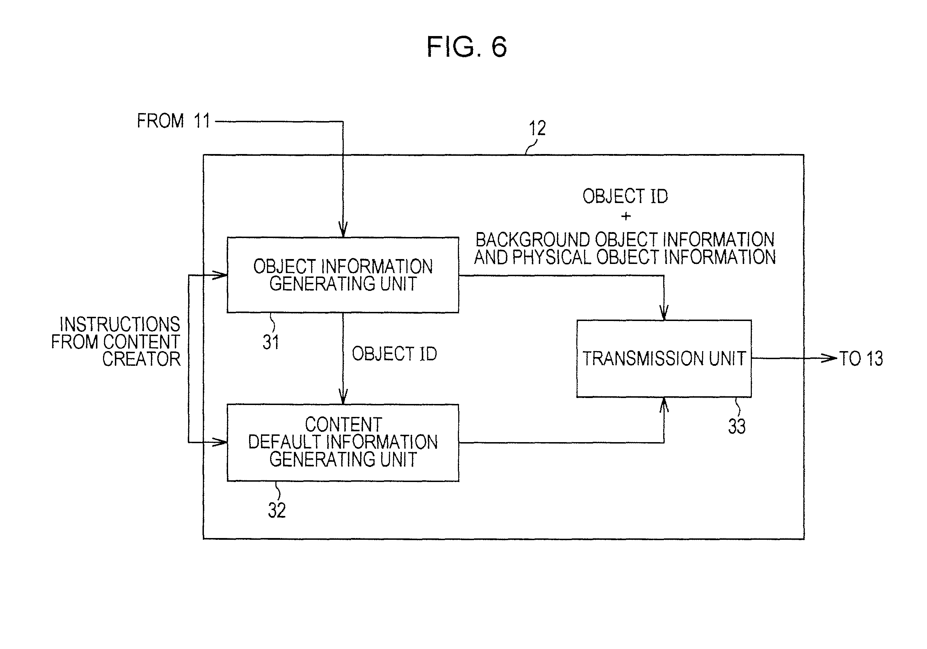

Next, Fig. 6 shows a configuration example of the transmission device 12 in Fig. 1.

In Fig. 6, the transmission device 12 is made up of an object information generating unit 31, content default information generating unit 32, and transmission unit 33.

Sensing information is supplied from the sensing device 11 to the object information generating unit 31. Further, instruction information indicating editing instructions performed by a content creator operating an unshown operating unit is also supplied to the object information generating unit 31.

The object information generating unit 31 generates object information for each object from the sensing information from the sensing device 11, regarding objects that editing is instructed with instruction information, and so forth, for example. Further, the object information generating unit 31 generates a unique object ID (idenfitication) for identifying an object, and supplies this along with the object information of an object that such object ID indicates to the transmission unit 33.

Note that the object ID is also supplied to the content default information generating unit 32 from the object information generating unit 31.

Also, object information generated by the object information generating unit 31 may include object information for a background object and object information for physical objects other than the background. Hereafter, the object information for the background is also called background object information, and the object information for physical objects other than the background is also called physical object information.

Now, object information is also information for realizing a sensation obtained when observing an object.

Sensations obtained when observing an object may be that which is felt with the so-called five senses, i.e. for example an image of an object recognized by seeing (perception) (light reflected off of the object), a sound that an object emits, recognized by hearing (audio), an odor of an object recognized by smelling, the taste of an object recognized by tasting, and temperature and so forth of an object recognized by touching.

Object information is information for realizing a sensation obtained when an object, or content made up of objects, such as described above, is observed, and is information for each object.

The information for realizing the sensation obtained when observing an object (content) is also called sensory information.

Object information which is sensory information can use parameters for identifying a physical model for physical simulation to realize the sensation obtained when observing the object (hereinafter referred to as model parameters).

The model parameter may be, for example, a first parameter unique to the object, for simulating the movement when an object is a rigid body, and a second parameter unique to the object, for simulating an image of the object reflected to the visual sense when the object is seen in various lighting conditions and in various locations and directions.

The first parameter unique to the object, for simulating the movement when an object is a rigid body, may be for example, the mass of an object, moment of inertia, geometric shape (object boundary shape used for mutual actions between objects (collision, friction, and so forth)), coefficient of restitution, coefficient of friction, size in real world (e.g. the degree that a unit measurement of a mesh coordinate corresponds to the real world).

Note that the first parameter for a background object may also be, for example, the wind speed at a given location (in air), speed of flow (in water), gravity, and so forth.

Also, in the case that the first parameter is included in a model parameter, with the reception device 13 (Fig. 1), simulation is performed wherein the first parameter is used to simulate movement when the object is a rigid body.

A simulation method to simulate movement when the object is a rigid body, may be for example, a movement simulation using kinetic simulation (ODE (Open dynamics Engine) (registered trademark)). ODE is described in the ODE web page (URL: http://www.ode.org/), for example.

On the other hand, the second parameter for simulating an image of the object reflected to the visual sense when the object is seen in various lighting conditions and in various locations and directions may be, for example, an external shape model such as color information and mesh information; lighting information; object material information (related to illumination reflectance, reflectance properties) and so forth.

Note that the second parameter for the background object can also employ intermediate data disclosed in Japanese Unexamined Patent Application Publication No. 2004-015106, for example. Intermediate data is, for example, data of an image of the object reflected to the visual sense when the object is seen from various directions, and hereafter will be referred to as a "ray-space expression database", as appropriate.

Also, in the case that the second parameter is included in the model parameter, with the reception device 13 (Fig. 1), simulation is performed wherein the second parameter is used to simulate images of an object reflected to the visual sense when the object is seen in various lighting conditions and in various locations and directions.

A simulation method to simulate images of an object reflected to the visual sense when the object is seen in various lighting conditions and in various locations and directions may be, for example, a method to generate computer graphics (hereafter abbreviated to "CG") under the condition of performing CG perspective modifications using an OpenGL (R) (Open Graphics Library), settings for lighting conditions, and so forth. A description of OpenGL (R) can be found at the URL: http://ja.wikipedia.org/wiki/OpenGL, for example.

Now, ideal information for a model parameter is information for simulating changes in various states which objects cause to in the real world (actual world).

In the case that ideal information is included in the model parameter, with the reception device 13 (Fig. 1), using such ideal information, simulation other than rigid-body simulation to simulate movement of a rigid body, i.e. force simulation that is general-use to an extent which simulates physical forms such as fluids or the like (e.g. grid method, particle method, etc), simulation to simulate dispersion of light, simulation to simulate temperature changes, and ultimately atom-level simulation, are performed whereby many kinds of simulators are used for performing such simulations.

Note that physical amounts wherein simulation is difficult, as well as specified physical amounts of an object can employ object-specific information instead of a model parameter for the object information thereof.

Object-specific information is for example sensing information obtained by performing sensing of an object with a sensing device 11 and information to simulate a pseudo-physical amount of an object.

Sensing information serving as the object-specific information may be, for example, information expressing a sound emitted by the object (audio), temperature of the object, internal configuration of an object (as photographed with an X-ray), the smell of an object, the taste of an object, and so forth.

Information to simulate a pseudo-physical amount of an object serving as the object-specific information may be, for example, information for cross-creation to create sound from a view of a physical object (e.g. a template of sounds emitted when objects collide with one another), and so forth.

Object information may include the above-described model parameters and object-specific information, as well as information to improve the entertainment value of the content (hereafter, also referred to as "entertainment information"), energy information, trigger information, and so forth.

Entertainment information is information for creating state variations of an object not reproducible with physical simulation, and for example is information of a sketch drawing of an object (an image like a sketch drawing) (an image with a sketch-like touch).

Energy information is for example information for realizing reality taking into consideration the viewing/listening environment at the reception device 13 side (e.g. size of display), and for example is the size of the object.

That is to say, with the reception device 13, in the case that the image content is displayed on a large-screen display, for example, the object (e.g. a person) making up the content may be displayed on the large-screen display in a size larger than the real-world size thereof.

For example, in the case that the person displayed on the display is larger than the size when actually seen in the real world, the realistic sense is diminished, and so-called reality is lost.

Thus, at the reception device 13, reality processing is performed to adjust the size of the object displayed on the display so that an object is not displayed larger than the size thereof in the real world, i.e. so that the user comprehends as if the user is seeing a real-world object.

Energy information is used at the reception device 13 for reality processing such as described above.

Trigger information is information for the above-described cross-creation, for example.

Instruction information indicating editing instructions that the content creator has performed by operating an unshown operating unit is supplied to the content default information generating unit 32.

The content default information generating unit 32 generates content default information including time-series data relating to the state of an object, regarding each object indicated with an object ID supplied from the object information generating unit 31, according to instruction information from the content creator, and supplies this to the transmission unit 33.

That is to say, for example, for the content serving as a program that the content creator is attempting to create, if we say that a virtual space is assumed, and such virtual space is a content world, the content creator instructs information such as information relating to the state of the object such as the position or direction of each object in the content world as indicated by the object ID from the object information generating unit 31, lighting conditions of the content world (position of the light source that illuminates the objects in the content world, the brightness of such light source, and so forth), and information of the position and direction of the observer (user) observing the object in the content world, by operating the operating unit.

The content default information generating unit 32 generates time-series data relating to the state of the object, time-series data of the lighting conditions, and time-series data of the position and direction and the like of the observer, according to the instruction information indicating the instructions from the content creator, and supplies this time-series data to the transmission unit 33 as content default information.

As described later, with the reception device 13 (Fig. 1), in the case that there is no particular instruction from the user, settings are performed for the disposal (position) and direction of each object in the content world, lighting conditions of the content world, and the position and direction of the observer, based on the content default information, and according to such settings, the images and so forth seen by the observer are generated as the content serving as a program.

The transmission unit 33 transmits (broadcasts) object information (physical object information and background object information) supplied from the object information generating unit 31, the object ID, and the content default information supplied from the content default information generating unit 32 as broadcast data.

Note that the object information generated with the object information generating unit 31 may be sensory information for all of the five senses, of may be sensory information for a portion of senses of the five senses, i.e. for example of the five senses, sensory information for 1, 2, 3, or 4 senses, or senses other than seeing and hearing, i.e. one or more of the senses of smell, taste, and touch.

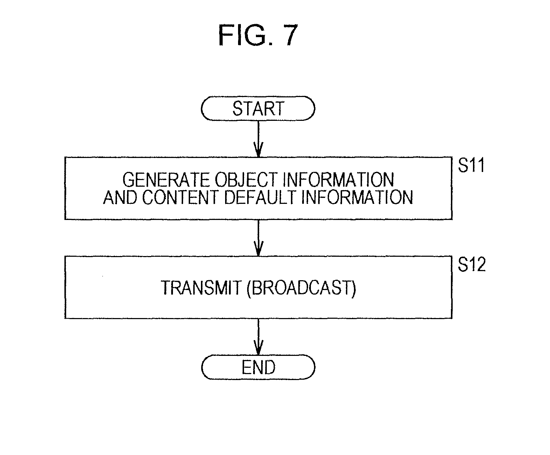

Next, the processing of the transmission device 12 in Fig. 6 will be described with reference to Fig. 7.

In step S11, the object information generating unit 31 generates object information for each object from the sensing information supplied from the sensing device 11, and also generates object IDs to identify the objects. Further, the object information generating unit 31 1 supplies the object IDs to the content default information generating unit 32, and also supplies the object ID and the object information of the objected indicated by the object ID so as to be correlated together to the transmission unit 33.

Also, in step S11, the content default information generating unit 32 generates content default information for each object indicated by the object ID from the object information generating unit 31 according to the instruction information from the content creator, and supplies this to the transmission unit 33.

The processing is then advanced from step S11 to step S12, and the transmission unit 33 transmits the object information with which the object ID from the object information generating unit 31 is correlated, and the content default information from the content default information generating unit 32, as broadcast data.

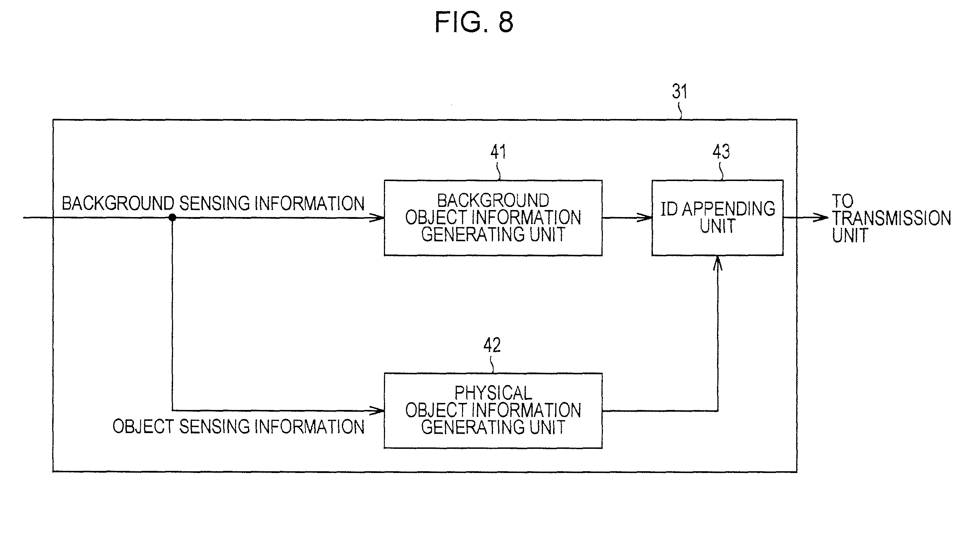

Next, Fig. 8 shows a configuration example of the object information generating unit 31 in Fig. 6.

In Fig. 8, the object information generating unit 31 is made up of a background object information generating unit 41, physical object information generating unit 42, and ID appending unit 43.

Sensing information is supplied from the sensing device 11 (Fig. 1) to the background object information generating unit 41 and physical object information generating unit 42.

The background object information generating unit 41 generates the background object information of the background object (an object other than the physical objects for generating the content) from the (sensing information of the background of the) sensing information from the sensing device 11, and supplies this to the ID appending unit 43.

Now, background object information (object information) can employ a model parameter to identify the physical model for physical simulation for the purpose of realizing a sensation obtained when the object is observed, as described in Fig. 6, and a model parameter may be, for example, a first parameter to simulate movement when an object is a rigid-body and a second parameter to simulate the image of an object reflected to the visual sense when the object is seen under various lighting conditions and from various positions and directions.

For the background object, for example wind speed, flow speed, gravity and so forth at various positions in the background object become the first parameter serving as the background object information.

Also, for example, a ray-space expression database or the like for the background object, which can be created from images only of the background object, obtained when the background object (hereafter, also referred to as "background image") is seen from multiple angles (directions) becomes the second parameter serving as the background object information.

Note that with the sensing device 11 (Fig. 1), in the case of performing photographing serving as sensing with the second mode (Fig. 4), only the background object is reflected on the image serving as the sensing information output by the sensing device 11, whereby a background image can be obtained.

On the other hand, in the case of performing photographing serving as sensing with the first or third mode (Fig. 3 or Fig. 5), physical objects as well as the background object is reflected on the image serving as the sensing information output by the sensing device 11.

In this case, the background object information generating unit 41 uses background memory to extract the background image, i.e. an image wherein only the background object is reflected, from the image that both the background object and physical objects are reflected.

Methods to extract a background image using background memory are described in Japanese Unexamined Patent Application Publication No. 1995-038858, Japanese Unexamined Patent Application Publication No. 1995-046533, and Japanese Unexamined Patent Application Publication No. 1999-164264, for example.

Also, creation of a ray-space expression database of the background object from the background image of multiple angles can be performed with the technique described in Japanese Unexamined Patent Application Publication No. 2004-015106, for example.

That is to say, the background object information generating unit 41 extracts color information of the rays emitted in predetermined directions from the background object, from the background image of multiple angles, and saves the color information thereof in each predetermined direction as image data in the case that the background object is viewed from a far distance in the predetermined direction. Thus, the image data saved for each predetermined direction is the ray-space expression database.

Note that as described in Japanese Unexamined Patent Application Publication No. 2004-015106, the pixels of the image data saved for each predetermined direction may include pixels regarding which obtain pixel values may not be directly obtained from the background image, and in this case, interpolation of pixel values can be performed for the pixels of which pixel values are unavailable, using pixel values of the pixels nearby that pixel or pixel values of the pixels of the image data in the direction adjacent to the predetermined direction.

Methods for interpolating the pixel values may include, for example, a method for the average value of the pixel values used for interpolation to be the pixel value of the pixel subject to interpolation, and a method to convert the image data before interpolation into image data after interpolation using a class separation adaptation processing.

This class separation adaptation processing is described in Japanese Unexamined Patent Application Publication No. 2007-235312, for example.

According to the ray-space expression database of the background object thus obtained, as described in Japanese Unexamined Patent Application Publication No. 2004-015106, an image (background object image of arbitrary angles) can be generated which is obtained when viewing the background object from an arbitrary direction.

Note that as described in Fig. 6, the background object information (object information) can employ sensing information (serving as object-specific information), instead of model parameters.

Sensing information to serve as background object information may be, for example, information indicating sounds that the background object emits (background object audio), the temperature of the background object, the humidity of the background object, the smell of the background object, and the size of the background object (size in real world (wideness of space, etc)).

Note that in the case that collection of sounds as the sensing is performed in the second mode (Fig. 4) with the sensing device 11 (Fig. 1), the audio serving as the sensing information output by the sensing device 11 is only audio of the background object, whereby only the audio for the background object can be obtained.

On the other hand, in the case that collection of sounds as the sensing is performed in the first or third mode (Fig. 3 or Fig. 5) with the sensing device 11, the audio serving as the sensing information output by the sensing device 11 includes not only audio of the background object, but also audio of the physical objects.

In this case, the background object information generating unit 41 extracts only the audio of the background object from the audio including audio of both the background object and the physical objects with a sound-source separation technique, whereby this becomes background object information.

The physical object information generating unit 42 generates the physical object information of the physical objects for each physical object from the (sensing information of the physical objects of the) sensing information from the sensing device 11, and supplies this to the ID appending unit 43.

Physical object information (object information) can employ a model parameter for identifying a physical model for physical simulation in order to realize a sensation obtained when observing an object, as described in Fig. 6, and the model parameter may be, for example, a first parameter for simulating movement when the object is a rigid body and a second parameter for simulating an image of an object reflected to the visual sense when the object is seen in various lighting conditions and in various locations and directions.

With the physical objects, for example, the mass, size, geometric shape, moment of inertia, coefficient of friction, and so forth of the physical objects may take the first parameter as physical object information.

For the mass of the physical object, sensing to measure the weight of the physical object is performed with the sensing device 11 (Fig. 1), and the physical object information generating unit 42 obtains the mass of the physical object from the sensing information obtained as a result of such sensing.

Also, for the size and geometric shape of the physical object, sensing to measure distance of the physical object from various directions over 360 degrees is performed at the sensing device 11 with a laser beam, for example, and the physical object information generating unit 42 computes the size and geometric shape of the physical object from the sensing information obtained as a result of such sensing.

Further, for the moment of inertia, the physical object information generating unit 42 computes the moment of inertia using the geometric shape, size, and density of the physical object.

Also, with the physical object information generating unit 42, values of the coefficient of restitution and coefficient of friction are prepared beforehand for each type of physical object, and values corresponding to the type of physical object are selected to the values thereof.

Note that the coefficient of restitution and coefficient of friction may be measured with the sensing device 11 (Fig. 1) if measurement can be performed as sensing.

Next, the second parameter serving as the physical object information generated by the physical object information generating unit 42 will be described.

The second parameter serving as the physical object information is a parameter for simulating an image of a physical object reflected to the visual sense when the physical object is seen in various lighting conditions and in various locations and directions, and for example can employ a wire frame (3-dimensional shape) used for CG creation and texture information.

In this case, the physical object information generating unit 42 obtains the wire frame and texture information serving as the second parameter from the image obtained by viewing the physical object from two or more directions (e.g., stereo image or the like), obtained by performing photographing as the sensing with the sensing device 11.

A method to obtain the wire frame and texture information from a stereo image, and a method to create an image (CG) from such wire frame and texture information, are described in Japanese Unexamined Patent Application Publication No. 2005-165468, for example.

According to the wire frame and texture information thus obtained, an image of the physical object reflected to the visual sense when the physical object is seen in various lighting conditions and in various locations and directions can be simulated.

Note that as described in Fig. 6, the physical object information (object information) can employ the sensing information (serving as object-specific information) instead of a model parameter.

The sensing information which is the physical object information may be, for example, information that indicates sounds that the physical object emits (audio of the physical object), the temperature of the physical object, the taste of the physical object, the odor of the physical object, the internal configuration of the physical object (photographed with an X-ray), and the size of the physical object.

Note that in the case that collection of sounds as the sensing is performed in the second mode (Fig. 4) with the sensing device 11 (Fig. 1), the audio serving as the sensing information output by the sensing device 11 is only audio of one physical object, whereby only the audio for the one physical object can be obtained.

On the other hand, in the case that collection of sounds as the sensing is performed in the first or third mode (Fig. 3 or Fig. 5) with the sensing device 11, the audio serving as the sensing information output by the sensing device 11 includes not only audio of the one physical object, but also audio of other physical objects and background object.

In this case, the physical object information generating unit 42 extracts, from audio of one physical object and audio including audio of another physical object and the background object, only the audio of the one physical object, using a sound-source separation technique, whereby this becomes physical object information of the physical object thereof.

The ID appending unit 43 appends an object ID to the background object information of the background object from the background object information generating unit 41 for identifying such background objects, and supplies this to the transmission unit 33 (Fig. 6), and also appends an object ID to the physical object information of the physical object from the physical object information generating unit 42 for identifying such physical objects, and supplies this to the transmission unit 33.

Next, as described above, in Fig. 8 the physical object information generating unit 42 obtains wire frame and texture information, using the technique described in Japanese Unexamined Patent Application Publication No. 2005-165468.

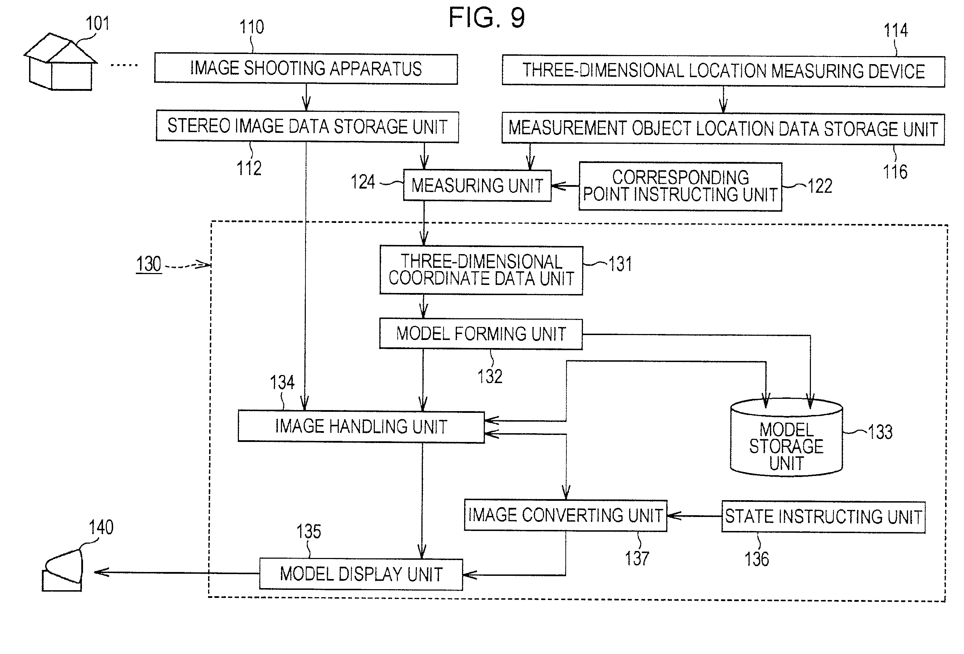

Fig. 9 shows a configuration example of an image processing device that uses the technique described in Japanese Unexamined Patent Application Publication No. 2005-165468 to obtain the wire frame and texture information, and further creates an image from such wire frame and texture information.

The image processing device in Fig. 9 computes a 3-dimensional shape of a measurement object 101, with a stereo image made up of two images right and left as one unit, from an image photographed multiple times at least twice, and also pastes a texture expressing a 3-dimensional feel to the 2-dimensional image of the measurement object 101, using a 3-D (3-dimensional) measurement of the entire measurement object 101 or the obtained 3-D data. Texture here means a write-in expressing a pattern or tactile feel attached to the surface of a shape with graphics or the like.

In Fig. 9, the measurement object 101 is a tangible entity that is a construction target object/manufacturing target object, and for example various types of created objects such as buildings as well as people and scenery and so forth are applicable thereto.

An image photographing device 110 is a device wherein, for example a stereo camera or general-use digital camera and a device for performing compensation of lens aberration as to the left and right images of the measurement object 101 photographed with such digital camera is combined.

A stereo image data storage unit 112 stores the stereo image of the measurement object 101. That is to say, the stereo image data storage unit 112 stores the left and right images of the measurement object 101 photographed with the image photographing device 110.

A 3-dimensional location measuring device 114 is a device to automatically measure reference points subject to surveying using a laser or the like, and includes a total station, 3-dimensional scanner, and the like.

A measurement object location data storage unit 116 stores location data of the measurement object 101 serving as three base points for absolute orientation. That is to say, the measurement object location data storage unit 116 stores location data of the reference points measurement with the 3-dimensional location measuring device 114. Note that usage wherein absolute orientation is not performed but mutual orientation using a model coordinate system is sufficient, falls short of providing a measurement object location data storage unit 116.

A corresponding point instructing unit 122 instructs corresponding points to be used with a plotting unit 124. The corresponding point instructing unit 122 is configured so as to show the feature points nearby the instruction location regarding the measurement object 101 shown on the display device 40, for example. The feature points near the instruction location may be, for example, the center location of the measurement object 101, the center of gravity location, a corner location, and so forth. Upon the corresponding points being instructed by the corresponding point instructing unit 122, even if the operator does not strictly instruct the feature points, the corresponding points are pulled in to the originally intended feature points, whereby the operator can readily perform plotting using the plotting unit 124.

The plotting unit 124 obtains corresponding relation of the stereo image, based on the photograph location and slope relating to the stereo image.

The display image forming unit 130 has a 3-dimensional coordinate data unit 131, model forming unit 132, model storage unit 133, image handling unit 134, model display unit 135, state instructing unit 136, and image converting unit 137.

The 3-dimensional coordinate data unit 131 obtains 3-dimensional coordinate data of the corresponding points of the measurement object 101 from the corresponding point relation found with the plotting unit 124.

The model forming unit 132 forms a model of a measurement object 101 from the 3-dimensional coordinate data of the corresponding points.

The model storage unit 133 stores a model of the measurement object 101 formed with the model forming unit 132.

The image corresponding unit 134 correlates the stereo image of the measurement object stored in the stereo image data storage unit 112 and the model formed with the model forming unit 132 using the corresponding point relation found with the plotting unit 124.

The model display unit 135 displays the measurement object 101 on the display device 140 as a 2-dimensional image having a 3-dimensional feel, using the stereo image correlated to the model with the image corresponding unit 134. Note that the model display unit 135 can be a display unit on the broadcast side to confirm the object model image.

The state instructing unit 136 instructs the state of the model of the measurement object 101 displayed on the display device 140, according to the operator operating a cursor input device such as a mouse, for example.

The image converting unit 137 performs coordinate conversion of the corresponding points in accordance with the state instructions as to the model.

The display device 140 is an image display device such as a liquid crystal display device.

With the image processing device thus configured, first, two or more images of the measurement object 101 photographed using the image photographing device 110 such as a digital camera are registered in the stereo image data storage unit 112.

Next, of the images registered in the stereo image data storage unit 112, a pair of left and right images to serve as a stereo pair, is set.

Next, determination is made as to whether there are any 3-dimensional coordinates of the measurement object 101 obtained using the 3-dimensional location measuring device 114 or 3-D scanner, and in the case determination is made that such coordinates exist, location data is read into the measurement object location data storage unit 116 using the 3-dimensional coordinates of the measurement object 101.

On the other hand, in the case determination is made that the 3-dimensional coordinates of the measurement object 101 do not exist, processing can be performed with a relative coordinate system, whereby the above-described processing to read the location data into the measurement object location data storage unit 116 using the 3-dimensional coordinates of the measurement object 101 is skipped.

Subsequently, the plotting unit 124 performs plotting, performs mutual plotting of the stereo images of the measurement object 101 stored in the stereo image data storage unit 112, and obtains the corresponding point relation of the stereo images. This plotting work has three modes of manual, semi-automatic, and fully-automatic.

The plotting work here is work to instruct, with a mouse cursor or the like, the corresponding points (same point) of each of the two or more images in each image with the corresponding point instructing unit 122 and to read the image coordinates thereof. Six or more of such corresponding points are normally used for each image. Also, if the reference point coordinates are stored in the measurement object location data storage unit 116, the reference point coordinates and the image are correlated, and absolute plotting is executed.

Subsequently, plotting calculation processing is performed with the plotting unit 124, using the coordinates of the corresponding points found with the plotting work. With the plotting calculation processing, the photographing camera position, tilt, location of corresponding point, and measurement accuracy can be found. If there are any reference point coordinates, these are read out from the measurement object location data storage unit 116 and absolute plotting calculation processing is also performed. If there are not any reference point coordinates, calculations are made with the relative (model) coordinates. The plotting calculation processing is performed with mutual plotting for correlation of the stereo model, and is performed with bundle adjustment for plotting between all images.

Next, stereo measurement is performed with the 3-dimensional coordinate data unit 131, and the 3-dimensional coordinates of the measurement object 101 are found. Alternatively, even in a case wherein stereo measurement is not performed, in the case that the 3-dimensional coordinates of the corresponding points of the stereo image are read in the measurement object location data storage unit 116 beforehand, the 3-dimensional coordinate data unit 131 reads in the 3-dimensional coordinates of the corresponding points from the measurement object location data storage unit 116. Stereo measurement has various types of modes such as manual measurement, semi-automatic measurement, and automatic measurement, as described in Japanese Unexamined Patent Application Publication No. 2003-284098, for example. Thus, in accordance with the plotting calculation processing results, with stereo measurement, the stereo (left and right) images which can appear to be 3-dimensional are created and displayed, and the 3-dimensional coordinates of the corresponding points are found using the above-described mode. In the case of using the automatic measurement mode, a measurement region to perform the automatic measurement is specified and the automatic measurement is performed. In the case of manual and semi-automatic measurement, the corresponding points on the left and right images are measured, while observing the left and right stereo screens, while confirming the corresponding points with a mouse, either semi-automatically or manually.

Subsequently, a model of a measurement object 101, e.g. a wire frame, is created in the model forming unit 132 from the obtained 3-dimensional coordinates or the read-in 3-dimensional coordinates.

A screen for which texture mapping is desired is specified with the image corresponding unit 134. Texture mapping is pasting texture which expresses a 3-dimensional feel to a 2-dimensional image of the measurement object 101.

Next, the image corresponding unit 134 performs texture mapping for the stereo images of the measurement object 101 and the model formed with the model forming unit 132, using the corresponding point relation obtained with the plotting unit 124.

Next, with the model display unit 135, the image subjected to texture mapping is displayed on the model screen. The model screen is a 2-dimensional image of the measurement object 101 showing a perspective state, as a 3-dimensional-feel textured image formed from the stereo image or an image having texture removed therefrom.

Subsequently, upon the operator using a mouse or keyboard to instruct the display direction of the measurement object 101 with the state instructing unit 136, the image converting unit 137 performs coordinate conversion and converts the display direction of the measurement object 101 displayed on the display device 140 to the direction specified with the state instructing unit 136.

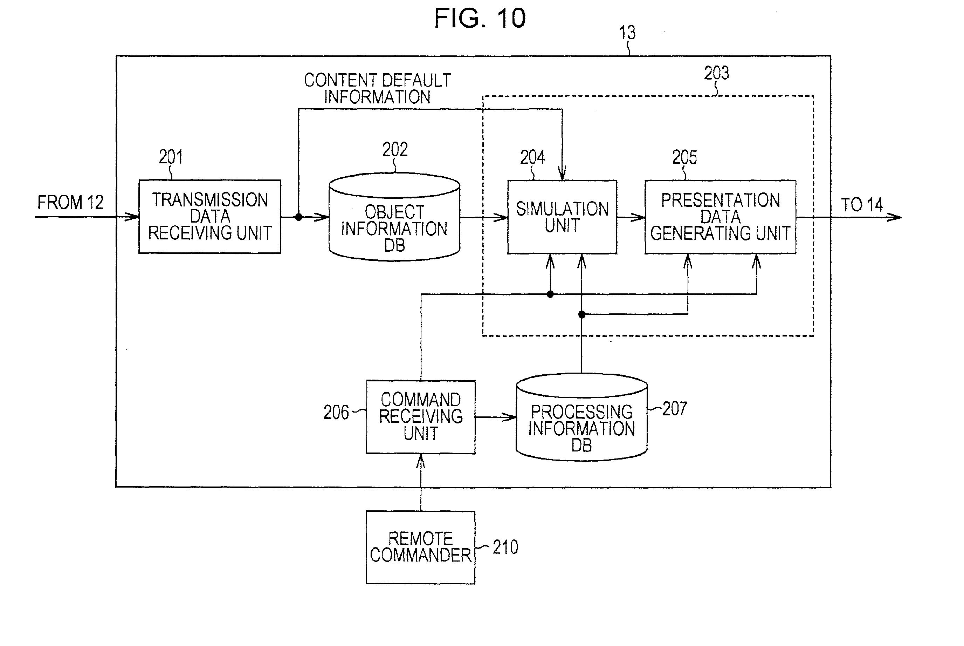

Next, Fig. 10 is a block diagram illustrating a configuration example of the reception device 13 in Fig. 1.

In Fig. 10, the reception device 13 is made up of a transmission data receiving unit 201, object information database (hereafter abbreviated to "DB") 202, generating unit 203, command receiving unit 206, and processing information DB 207.

The transmission data receiving unit 201 receives the data transmitted from (the transmission unit 33 (Fig. 6) of) the transmission device 12, and separates this into object information to which object IDs are correlated, and content default information. Further, the transmission data reception unit 201 supplies the object information to which object IDs are correlated (hereafter, also referred to as "object information with object ID") to the object information DB 202, and supplies the content default information to the generating unit 203.

The object information DB 202 stores the object information with object ID which is supplied from the transmission data receiving unit 201.

The generating unit 203 generates content based on the object information stored in the object information DB 202.

Also, the generating unit 203 generates content based on processing information which is information related to processing as to the content according to instructions of the user (the user of the reception device 13) observing the content supplied from the command receiving unit 206 and processing information DB, for example.

Further, the generating unit 203 generates content based on the content default information supplied from the transmission data receiving unit 201, as appropriate.

That is to say, the generating unit 203 is made up of a simulation unit 204 and presentation data generating unit 205.

The simulation unit 204 generates content (content world) by performing physical simulation based on model parameters serving as object information stored in the object information DB 202, for example, and supplied the (data of) the content to the presentation data generating unit 205.

Note that with the simulation unit 204, processing is applied to the objects making up the content based on the processing information supplied from the command receiving unit 206 and processing information DB 207 and the content default information supplied from the transmission data receiving unit 201.

However, with the simulation unit 204, of the processing information supplied from the command receiving unit 206 and processing information DB 207 and the content default information supplied from the transmission data receiving unit 201, the processing information has higher priority.

Accordingly, with the simulation unit 204, in the case that processing information is supplied from the command receiving unit 206 and processing information DB 207, processing is applied to the object (and therefore the content made up with the object) based on such processing information.

On the other hand, in the case that processing information is not supplied from the command receiving unit 206 and processing information DB 207 to the simulation unit 204, at the physical simulation unit 204 processing is applied to the object based on the content default information supplied from the transmission data reception unit 201.

The presentation data generating unit 205 generates presentation data in order to perform presentation with the presentation device 14 which performs presentation to provide a sensation corresponding to the sensory information, based on the content generated according to the object information which is also sensory information from the simulation unit 204, and supplies this to the presentation device 14.

Note that processing information is supplied to the presentation data generating unit 205 from the command receiving unit 206 and processing information DB 207. The presentation data generating unit 205 generates presentation data based on the processing information supplied from the command receiving unit 206 and processing information DB 207.

The command receiving unit 206 receives the commands expressing the user instructions which are transmitted from a remote commander 210.

That is to say, the remote commander 210 is operated by the user in the case of instructing processing as to the object (content) and so forth, and the command corresponding to the operation thereof, i.e. the command expressing user instructions, are transmitted by infrared or the like. The command receiving unit 206 receives the commands transmitted from the remote commander 210 as described above.

Further, the command receiving unit 206 generates processing information which is information relating to the processing as to the content in accordance with user instructions expressed by the command from the remote commander 210, and supplies this to the simulation unit 204, presentation data generating unit 205, and processing information DB 207.

The processing information DB 207 sequentially stores the processing information supplied from the command receiving unit 206. Thus, a history of the user instructions is stored in the processing information DB 207.

Next, the simulation unit 204 of the generating unit 203 will be described further.

The simulation unit 204 simulates the content world, based on at least the object information and content default information.

Note that with the simulation unit 204, when the user observes the content world, the image (light reflecting off the object) of the object recognized by seeing (perceiving) is at least a target for simulation.

As described in Fig. 6, the content default information is time-series data relating to the state of the object, time-series data of lighting conditions, and time-series data of the location and direction of the observer, as instructed by the content creator, and the simulation unit 204 performs settings for the positioning and direction of the object, lighting conditions, and observing location and direction of the user (the observer of the content), and generates content according to the settings thereof.

In this case, content (for example, a program similar to a currently running television broadcast program) according to the intent of the content creator is generated.

Also, the simulation unit 204 simulates the changes in the state of the object, if necessary.

That is to say, in the case that change to the state of the object according to the instructions of the content creator (change in position, direction, etc) is change to a state governed by a physical law that can be simulated, i.e. in the case that the state of the object can be computed by physical simulation, with the transmission device 12, the content default information is transmitted without the data relating to the state of the object is included in the content default information, i.e. initial values of the state of the object can be transmitted as content default information instead of the time-series data relating to the state of the object.

In this case, the simulation unit 204 performs physical simulation to simulate changes in the state of the object, from the initial values of the state of the object as content default information, thereby generating content.

A specific example of "change to a state governed by a physical law that can be simulated" may be, for example, position (speed) change from a free-fall of an object, or the like. Depending on the capability of a physical simulator (a simulator that can also simulate a collision between physical objects, for example), a parameter that is used regards a position change due to collision between known objects as a "change to a state governed by a physical law that can be simulated". Also, with the simulation unit 204, physical simulation of changes to states accompanying various physical phenomenon such as heat conductivity or the like, and not limited to movement simulation, can be performed using the initial values of the state of the object.

Thus, with the transmission device 12, content default information not including the data (time-series data) relating to the state of the object is transmitted, and at the reception device 13, changes to the state of the object are simulated, whereby compared to the case of transmitting content default information including time-series data relating to the state of an object, the data amount of data transmitted from the transmission device 12 can be reduced.

Also, in the case that the user intervenes in the content world, the simulation unit 204 simulates the content world based on the intervention information from the user.

That is to say, in the case that processing information relating to processing as to the content is supplied from the command receiving unit 206 to the simulation unit 204 by the user operating the remote commander 210, the simulation unit 204 uses the processing information as a higher priority than the content default information, and generates content.

The processing information is information relating to processing as to the content, and is information relating to processing for each object, such as operating the position object for example.

That is to say, upon the user operating the remote commander 210 to instruct the location of the physical objects, for example, the command receiving unit 206 generates the processing information to operate the location of the physical object, which is supplied to the simulation unit 204. The simulation unit 204 operates (sets) the location of the physical objects making up the content, based on the processing information from the command receiving unit 206.

Also, the user can operate the remote commander 210 to give instructions such as, for example, to remove a physical object, switch with another object, force (impulsive force) action (such as hitting), temperature, and so forth. Further, the user can operate the remote commander 210 to instruct, for example, the wind speed, flow, gravity, temperature, and so forth, of the background object.

The command receiving unit 206 generates the processing information relating to processing of (objects making up the) content in accordance to user instructions, and supplies this to the simulation unit 204. With the simulation unit 204, processing is applied to the physical objects and background objects making up the content, based on the processing information from the command receiving unit 206.

Further, the user can operate the remote commander 210 to instruct removal of data relating to a predetermined sensation of a predetermined object.

In this case, the command receiving unit 206 generates processing information for removing the data relating to a predetermined sensation of a predetermined object, according to the user instructions, and supplies this to the simulation unit 204. With the simulation unit 204, data relating to a predetermined sensation of a predetermined object making up the content is removed based on the processing information from the command receiving unit 206.

Accordingly, in the case that peanuts are included in the object making up the content, for example, upon the user instructing removal of data relating to the taste of peanuts, the data relating to the taste of peanuts making up the content is removed at the simulation unit 204. In this case, presenting the taste of peanuts to a user with a peanut allergy, for example, can be prevented.

Also, the user can operate the remote commander 210 to instruct converting the data relating to a predetermined sensation of a predetermined object into data relating to a predetermined sensation of another object.

In this case, the command receiving unit 206 generates processing information for converting the data relating to a predetermined sensation of a predetermined object into data relating to a predetermined sensation of another object in accordance with user instructions, and supplies this to the simulation unit 204. With the simulation unit 204, the data relating to a predetermined sensation of a predetermined object making up the content is converted into data relating to a predetermined sensation of another object, based on the processing information from the command receiving unit 206.

Accordingly, for example in the case that peanuts are included in the object making up the content, upon the user instructing to convert the data relating to the taste of peanuts into date relating to the taste of strawberries as a separate object, with the simulation unit 204, the data relating to the taste of peanuts making up the content is converted into data relating to the taste of strawberries. In this case, for example, a peanut having the flavor of strawberries is presented.

Also, the user can operate the remote commander 210 to instruct the location (observing location) and direction of the user who is the observer observing the content world.

In this case, the commander receiving unit 206 generates processing information to operate the observing location and direction of the observer according to the user instructions, and supplies this to the simulation unit 204. With the simulation unit 204, physical simulation with the observing location and direction of the observer having been set is performed, based on the processing information from the command receiving unit 206, whereby content is generated.

Further, the user can operate the remote commander 210 to instruct performing processing to improve the entertainment value of the content (hereafter referred to as "entertainment processing").

In this case, the command receiving unit 206 generates processing information to request that entertainment processing be performing, and supplies this to the simulation unit 204. The simulation unit 204 performs entertainment processing based on the processing information from the command receiving unit 206.

That is to say, the simulation unit 204 uses the entertainment information described in Fig. 6, which is included in the object information stored in the object information DB 202, so that the image of the object is a sketch image of the object thereof.

Also, the user can operate the remote commander 210 to specify performing reality processing.

In this case, the command receiving unit 206 generates the processing information requesting that reality processing be performed, and supplies this to the simulation unit 204. The simulation unit 204 performs reality processing based on the processing information from the command receiving unit 206.

That is to say, the simulation unit 204 generates content that does not lose reality, according to the size of display to present (display) the image of the presentation device 14.

Specifically, the simulation unit 204 accesses the presentation device 14, for example, and confirms the size of the display of the presentation device 14. Further, the simulation unit 204 confirms the size of the objects making up the content from the energy information described in Fig. 6 which is included in the object information stored in the object information DB 202.

The simulation unit 204 generates content wherein the size of the objects have been adjusted (enlarged or reduced) so that, based on the size of display of the presentation device 14 and the size of the objects making up the content, the object displayed on the display is a size of the object in the real world (the size of the object that would be recognized when the object is seen in the real world).

Note that the command receiving unit 206 supplies the processing information to the simulation unit 204 and also supplies the processing information to the processing information DB 207.

Upon the processing information being supplied from the command receiving unit 206, the processing information DB 207 generates status information indicating status when the processing information is supplied from the command receiving unit 206, and correlates this to the processing information and stores.

Upon becoming the status matching the status shown by the status information, the processing information DB 207 supplies the processing information corresponding to the state information thereof to the simulation unit 204. Upon the processing information being supplied from the processing information DB 207, the simulation unit 204 performs processing similar to the case wherein processing information is supplied from the command receiving unit 206, based on the processing information thereof.

That is to say, for example, with the presentation device 14, in the case that content including peanuts is presented, as described above, the user can operate the remote commander 210 to instruct removal of data relating to the taste of peanuts, and upon the command receiving unit 206 generating processing information for removing data relating to the taste of peanuts, the processing information thereof is correlated to status information showing the status of content including peanuts being presented, and is stored in the processing information DB 207.

Subsequently, when the status is such that content including peanuts is presented, the processing information DB 207 supplies the processing information correlated to the status information showing the status thereof, i.e. the processing information for removing the data relating to the taste of peanuts, to the simulation unit 204 (and the presentation generating unit 205).

With the simulation unit 204, similar to the case wherein the processing information is supplied from the command receiving unit 206, based on the processing information from the processing information DB 207, the data relating to the taste of peanuts making up content is removed.

Accordingly, the user does not have to operate the remote commander 210 and perform again the same instructions already performed once.

Also, with the simulation unit 204, in the case that processing information from the command receiving unit 206 (or processing information DB 207) is not supplied, as described above, content is generated based on the content default information, whereby the content following the content creator intent (e.g. an image wherein the content world with objects positioned according to the intent of the content creator is seen from the viewpoint according to the intent of the content creator) is presented.

On the other hand, in the case that the user operates the remote commander 210 and thereby processing information is supplied from the command receiving unit 206 as to the simulation unit 204, with the simulation unit 204, the processing information is used with a higher priority than the content default information, whereby content is generated.

In this case, user-specific content (e.g. in the case that the content of content creator intent is content to present (cause to sense) the taste of peanuts, processing to remove the data relating to the taste of peanuts is performed, based on the processing information to remove data relating to the taste of peanuts, and is content presented with no taste of peanuts) subjected to processing according to user instructions is presented.

As described above, as long as the user does not give any specific instructions after the processing of the object (content) according to user instructions, the simulation unit 204 transitions the state of the object gradually to a state based on the content default information.

That is to say, the simulation unit 204 simulates so that the content world gradually returns to the state based on the content default information.

Thus, for example, in the case that the user operates the remote commander 210 to instruct the direction of a certain physical objects to be in a predetermined direction, with the simulation unit 204, content wherein the physical object is facing the predetermined direction is generated.

Subsequently, upon the user stopping (disengaging) the operation of the remote commander 210, content is generated wherein with the simulation unit 204 the physical object facing the predetermined direction gradually faces the direction specified with the content default information.

Next, the content generated with the simulation unit 204 as described above is supplied to the presentation data generating unit 205, and with the presentation data generating unit 205, as described above, presentation data is generated based on content from the simulation unit 204, and supplied to the presentation device 14 (Fig. 1).

That is to say, the presentation data generating unit 205 extracts the information appropriate to the configuration of the presentation device 14 from the content world information simulated with the simulation unit 204, converts this to optimal data configuration for the configuration of the presentation device 14, and supplies this to the presentation device 14.

Specifically, in the case that the presentation device 14 is a speaker to present (output) sound (audio), for example, a display to present (display) images (light), an odor-emitting device to present (emit) odors, an air-conditioner to present (adjust) the temperature, and a humidifier to present (adjust) the humidity, the presentation data generating unit 205 generates the audio information synthesizing the audio for each object making up the content from the simulation unit 204 as presentation data, and supplies this to the speaker of the presentation device 14.

Also, the presentation data generating unit 205 generates the image information of the content world of the content from the simulation unit 204 as presentation data, and supplies this to the display of the presentation device 14.

Further, the presentation data generating unit 205 generates the odor information with the odors synthesized from each object making up the content from the simulation unit 204 as presentation data, and supplies this to an odor emitting device of the presentation device 14.

Also, the presentation data generating unit 205 generates the temperature information with the temperature of the background object making up the content from the simulation unit 204 as presentation data, and supplies this to the air conditioner of the presentation device 14.

Further, the presentation data generating unit 205 generates the humidity information showing the humidity of the background object making up the content from the simulation unit 204 as presentation data, and supplies this to the humidifier of the presentation device 14.

Note that in the case that the processing information supplied from the commander receiving unit 206 or processing information DB 207 is information for removing data relating to predetermined sensation of a predetermined object, when the data subject to removal is included in the presentation data generated based on the content from the simulation unit 204, the presentation generating unit 205 removes the data subject to removal (and does not supply this to the presentation device 14).

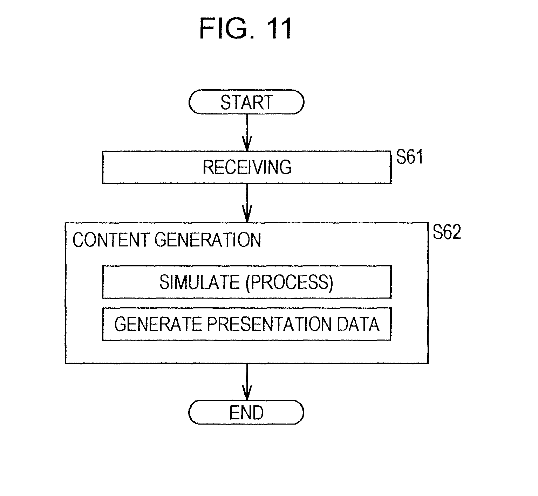

Next, the processing of the reception device 13 in fig. 10 will be described with reference to Fig. 11.

With the reception device 13, in step S61, the transmission data receiving unit 201 receives the data transmitted from the transmission device 12 (Fig. 6), and separates this into object information with an object ID and content default information. Further, in step S61, the transmission data receiving unit 201 supplies the object information to the object information DB 202 so as to be stored, supplies the content default information in the generating unit 203, and the processing advances to step S62.

In step S62, the generating unit 203 generates content based on the object information stored in the object information DB 202 and the content default information and processing information.

That is to say, the generating unit 203 generates content when the simulation unit 204 performs simulation based on the object information stored in the object information DB 202 and the necessary content default information and processing information, and supplies this to the presentation data generating unit 205. The presentation data generating unit 205 generates presentation data based on contents from the simulation unit 204, and supplies this to the presentation device 14.

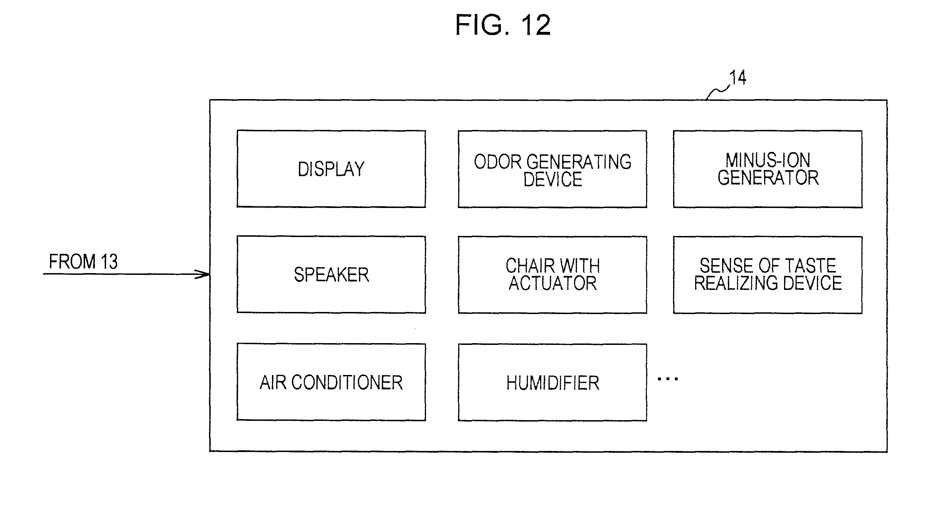

Next, Fig. 12 shows the configuration example of the presentation device 14 in Fig. 1.

The presentation device 14 provides stimulation to the five senses of the user, whereby a device can be configured that realizes a sensation, with objects making up the content, which could be obtained if observed in the real world.

That is to say, the presentation device 14 can be made up of, for example, a speaker to stimulate the hearing by outputting (presenting) sound, a display to stimulate the seeing by displaying (presenting) images, an odor-emitting device to stimulate the olfactory sense by emitting an odor (presenting), and so forth.

Other than these, the presentation device 14 can be made up of devices that perform various types of presentation, such as a negative-ion generator to generate negative ions, a chair with an actuator to provide motion to the user sitting therein, a taste-realizing device to realize a flavor, an air conditional to adjust the temperature, a humidifier to adjust the humidity, and so forth.

Thus, with the transmission/reception system in Fig. 1, the object information for each object is transmitted with the transmission device 12, and content is generated with the reception device 13 based on the object information from the transmission device 12, so presentation of content (output of sound, display of images, emitting odor, realizing flavor, etc) can be performed flexibly.

That is to say, differing from a broadcast according to related art wherein content created at the broadcast station is passively observed, with the transmission device 12, the object information is transmitted for each object, and content is generated with the reception device 13 based on the object information, whereby the user is given some leeway in processing (operating) the content, and thus each use can observe user-specific content.

With the transmission device 12, by transmitting the object information for each object, in the case of transmitting information including object information for multiple objects (e.g. an image showing multiple physical objects or a sound wherein the sounds emitted by multiple physical objects are combined, and so forth) with the transmission side, object extraction (e.g. extraction of an image of individual physical objects or separation (sound separation) of individual sounds, and so forth) at the reception side which is used for the processing of content (objects) can be omitted.

Also, with the transmission device 12, the content default information is further transmitted, and content is generated with the reception device 13 based on the object information and content default information, whereby the intent of the content creator (e.g. positioning of objects as intended by the content creator) can be applied to the content.

Further, with the reception device 13, content generating is performed based on processing information according to the user instructions, whereby, as described above, the user can observe user-specific content. Also, content processing by the user and intent of the content creator can be integrated.

Also, the object information is also sensory information in order to realize the sensations obtained with the five senses when observing an object (the broadcast performed with the transmission/reception system in Fig. 1 is a multi-sensory broadcast to stimulate the five senses other than (in addition to) seeing (images) and hearing (audio)), whereby the user can enjoy the physical amounts recognized by the sense of smell, sense of taste, and sense of feel, besides the images recognized by seeing and the sounds recognized by hearing, and accordingly, the user can observe the content with sensations other than seeing and hearing, or can observe content with 3 or more senses, for example.

Note that, in the case that the sensory information for realizing the sensations obtained by the five senses when observing the objects are broadcast with a passive, currently run broadcast system (which does not enable processing of content (objects) at the receiving side), only with images recognizable by seeing (including text and so forth) and audio recognizable by hearing, likes/dislikes of the user as to the content becomes stronger. For example, sensory information realizing the taste of peanuts to be uniformly broadcast to all users, and a user with a peanut allergy being presented with the taste of peanuts, is not desirable.

Thus, with the reception device 13, as described above, based on the processing information, content can be generated (presentation data can be generated), and for example, data relating to the taste of peanuts can be removed, whereby presenting the taste of peanuts to the user with a peanut allergy can be prevented.

Also, with the transmission device 12, as described above, the object information for each object is transmitted, so at the reception device 13, processing the data relating to the sense of taste, sense of smell, and sense of feel (data to stimulate the senses of taste, hearing, and touch) can be readily performed.

That is to say, with the transmission device 12, for example, if sensory information for realizing an odor in the state that the smell of multiple objects, such as strawberries and peanuts, are combined, is transmitted, separating the data relating to the smell of each of strawberry and peanut from such sensory information at the reception device 13 is difficult. On the other hand, with the transmission device 12, in the case of transmitting the object information for each object, such data separation can be omitted, increasing the advantages thereof.

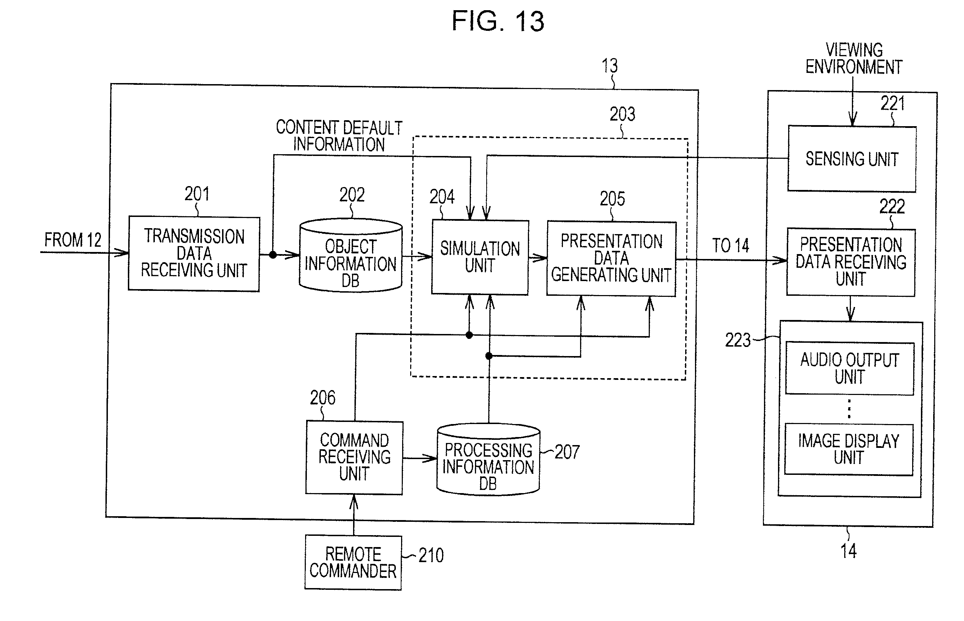

Fig. 13 is a block diagram illustrating a detailed configuration example of the presentation device 14 in Fig. 1.

In Fig. 13, the presentation device 14 is made up of a sensing unit 221, presentation data receiving unit 222, and presentation unit 223, and the content generated based on the object information with the generating unit 203 of the reception device 13 (content generated by performing physical simulation based on model parameters) (content generated based on sensory information) is presented.

The sensing unit 221 senses an environment wherein content presented with the presentation device 14 is observed (hereafter, also referred to as "observation environment"), and observation environment information relating to the observation environment obtained as a result of such sensing is output.

Now, the observation environment information output by the sensing unit 221 is supplied to the simulation unit 204 of the reception device 13.

With the simulation unit 204 (generating unit 203) of the reception device 13, content is generated based on object information (model parameters) (sensory information), and content default information and processing information, and also observation environment information from the sensing unit 221, and with the presentation device 14, content thus generated is presented.

Note that the sensing unit 221 senses the positional relation between the presentation device 14 itself and the user (observer) that observes the content presented by the presentation device 14, for example, and outputs the information showing the positional relation thereof as observation environment information. Also, the sensing unit 221 senses physical objects exiting in the observation environment, for example, and outputs the information relating to the physical objects as observation environment information. Further, the sensing unit 221 senses lighting conditions (brightness, etc) in the observation environment, for example, and outputs the information showing the lighting conditions thereof as observation environment information.

The presentation data reception unit 222 receives the presentation data from (the presentation data generating unit 205 of) the generating unit 203 of the reception device 13, and supplies this to the presentation unit 223.

The presentation unit 223 is made up of various types of devices which provide stimulation to the five senses, thereby realizing sensations that would be obtained if the object making up the content is observed in the real world, i.e. for example, an audio output unit to output audio, an image display unit to display images, and so forth, and performs content presentation in accordance with the presentation data from the presentation data reception unit 222.

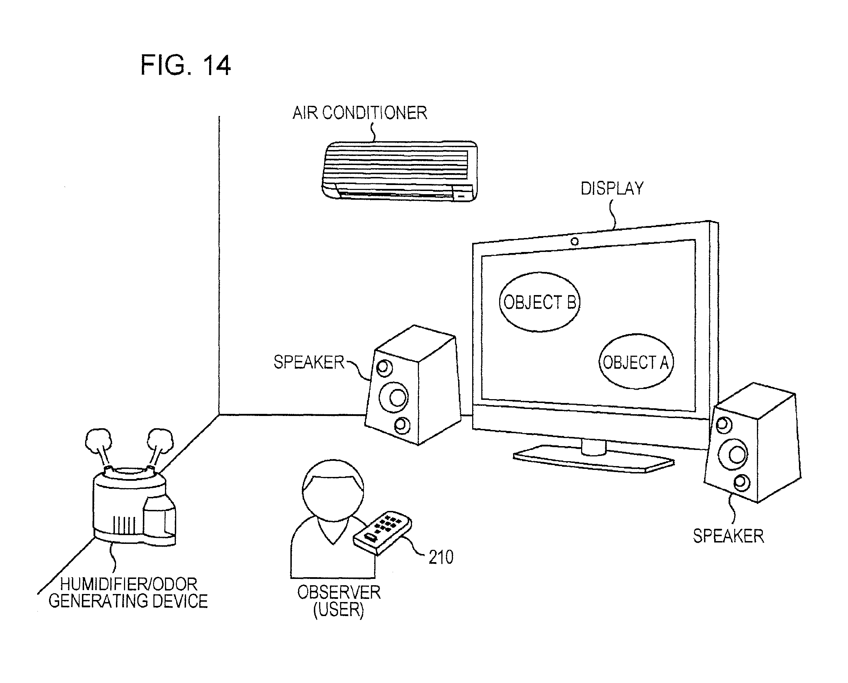

Fig. 14 shows a schematic example of the positioning of devices making up the presentation unit 223 in Fig. 13.

In Fig. 14, a speaker serving as an audio output unit to output audio, a display serving as an image display unit to display images, an air conditioner that adjusts the temperature, a humidifier than adjusts the humidity, an odor-emitting device to present smells, and so forth are disposed as devices making to the presentation unit 223.

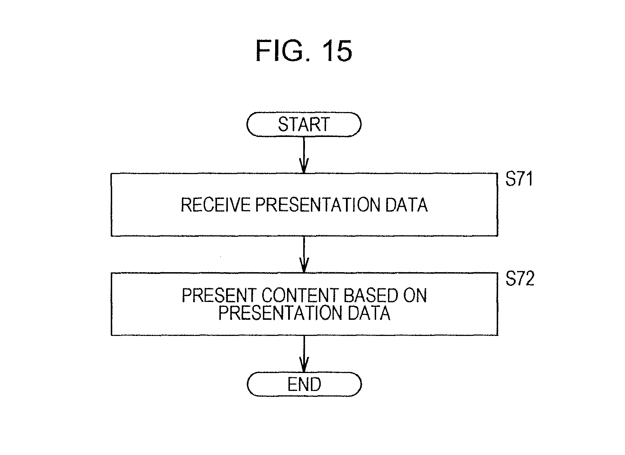

Next, the processing of the presentation device 14 in Fig. 13 will be described with reference to Fig. 15.

With the presentation device 14, the sensing unit 221 senses the observation environment, and supplies the observation environment information obtained as a result of such sensing to the simulation unit 204 of the reception device 13.

Then, in step S71, the presentation data receiving unit 222 awaits presentation data being supplied from the presentation data generating unit 205 of the receiving device 13, receives the presentation data thereof, and supplies this to the presentation unit 223, whereby the processing is advanced to step S72.

In step S72, the presentation unit 223 performs presentation of content in accordance with the presentation data from the presentation data receiving unit 222.

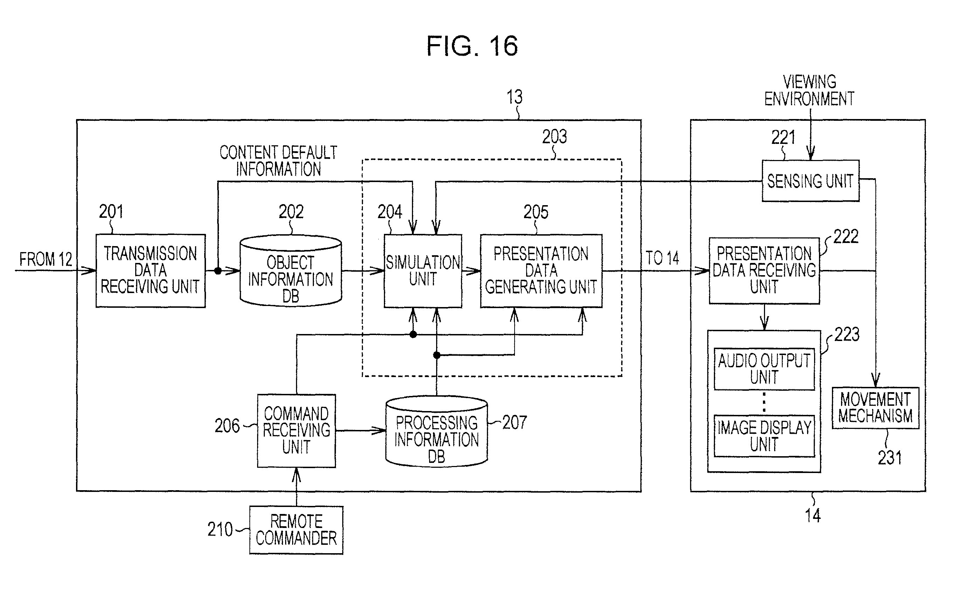

Next, Fig. 16 is a block diagram illustrating another detailed configuration example of the presentation device 14 in Fig. 1.

Note that the portions in Fig. 16 that correspond to the case in Fig. 13 have the same reference numerals, and the description thereof will be omitted below as appropriate.

That is to say, the presentation device 14 in Fig. 16 is configured the same as in the case in Fig. 13, except that a movement mechanism 231 is newly provided.

However, in the case of the above description, the generating unit 203 of the reception device 13 generates presentation data having combined information of the various objects making up the content, such as the presentation data combining the audio of each object making up the content, or presentation data combining the odors of each object, this presentation data being supplied to the presentation device 14, but in fig. 16, the presentation data for the objects is generated in the generating unit 203 of the reception device 13 for each object making up the content, and this is supplies to the presentation device 14.

Further, in Fig. 16, a presentation device 14 is individually prepared for each object making up the content. Note that in Fig. 16, only one presentation device 14 is illustrated.

Also, in Fig. 16, the sensing unit 221 supplies the observation environment information to the movement mechanism 231 as well as the simulation unit 204.

Further, in Fig. 16, the presentation data generating unit 205 obtains object information and content default information from the simulation unit 204, and supplies this, along with the presentation data, to the presentation data receiving unit 222.

The presentation data receiving unit 222 receives the presentation data, object information, and content default information from the presentation data generating unit 205, supplies the presentation data to the presentation unit 223 while supplying the object information and content default information to the movement mechanism 231.

The movement mechanism 231 causes the presentation device 14 to move, based on the observation environment information from the sensing unit 221 and the object information and content default information from the presentation data receiving unit 222, thereby controlling the presentation of the object information by the presentation device 14.

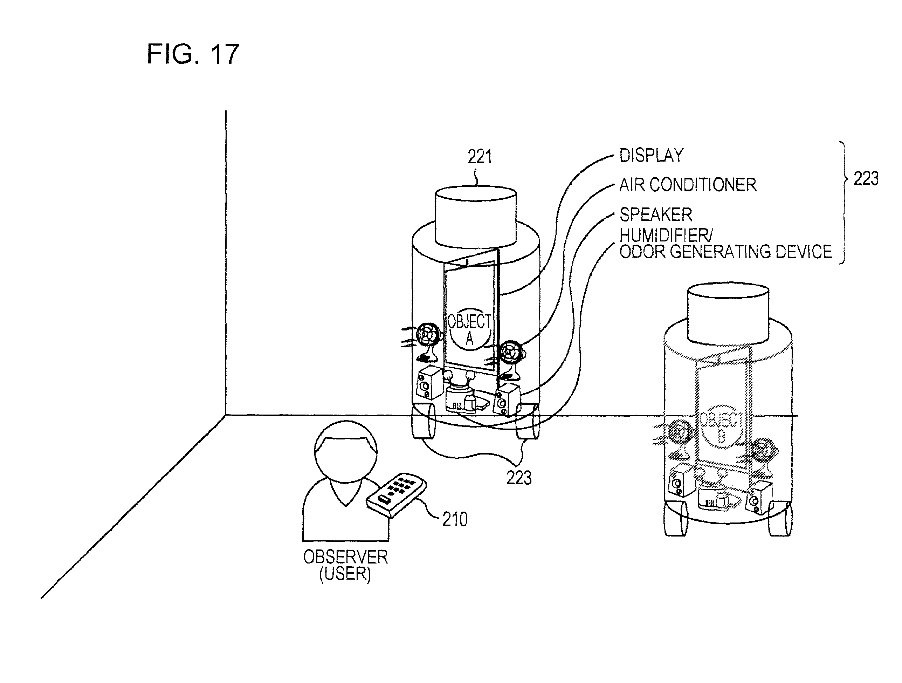

Fig. 17 is a diagram schematically showing a configuration example of the presentation device 14 in Fig. 16.

In Fig. 17, the presentation device 14 has a speaker serving as an audio output unit to output audio, a display serving as an image display unit to display images, an air conditioner that adjusts the temperature, a humidifier that adjusts the humidity, an odor-emitting device to present smells, and so forth, disposed as devices making up the presentation unit 223, and is moved by the movement mechanism 231.

That is to say, in Fig. 17, the movement mechanism 231 is configured including wheels, and the presentation device 14 is moved by rotationally driving the wheels thereof.

Note that for the movement mechanism 231, for example, a mechanism may be employed wherein the presentation device 14 is moved along a movable rail, or the like.

Now, an object presented by one of the presentation devices 14, which are prepared individually for each object making up the content, on which to focus, is also called an object of interest.

With the presentation device 14 performing the presentation of the object of interest, the movement mechanism 231 moves the presentation device 14 which performs presentation of the object of interest, based on information showing the location of the object of interest on the content generated by the generating unit 203 of the reception device 13.

That is to say, with the presentation device 14, the movement mechanism 231 obtains the positional relation of the object and observer in the content, from positional information of the object of interest set in the content default information from the presentation data receiving unit 222 and the positional information of the observer (user).

Further, with the presentation device 14, the movement mechanism 231 moves the presentation device 14 so that the actual positional relation between the presentation device 14 itself and the observer, as understood from the observation environment information from the sensing unit 221, matches the positional relation in the content as obtained from the content default information (controls the movement of the presentation device 14).

However, in the case that the observer operates the remote commander 210 so as to perform instructions to change a visual position, whereby the processing information corresponding to the instruction to change the visual position thereof is supplied from the command receiving unit 206 to the generating unit 203, the presentation data generating unit 205 of the generating unit 203 supplies the processing information from the command receiving unit 206 to the presentation data receiving unit 222 of the presenting device 14.

The presentation data receiving unit 222 receives the processing information from the presentation data generating unit 205, and supplies this to the movement mechanism 231.

The movement mechanism 231 moves the presentation device 14, based on the information showing the positional relation in the content of the object of interest after the perspective change and the observer, which is understood from the processing information from the presentation data receiving unit 222.

Note that in the case that the device serving as the presentation unit 223 which the presentation device 14 has is a device having directionality in the event of presentation, e.g. a flat-screen display or a speaker having directionality (hereafter also referred to as "directional device"), the movement mechanism 231 performs control in the direction of the presentation device 14 itself so that the directionality of the directional device matches the direction as to the observer.

Also, with the presentation device 14, the sensing unit 221 senses information showing the relation of position and direction between the presentation device 14 itself and the observer as observation environment information, and supplies this to the simulation unit 204 of the receiving device 13.

With the simulation unit 204, in the content world, presentation content of the object of interest to be observed by an observer having a relation of location and direction expressed by the observation environment information from the sensing unit 221 between the object of interest is simulated, and the presentation data corresponding to the results of the simulation is supplies from the presentation data generating unit 205 to the presentation device 14 corresponding to the object of interest (the presentation device 14 performing presentation of the object of interest).

Note that the presentation device 14 can be caused to perform an operation emphasizing a mutual interaction with the observation environment (hereafter, also referred to as "mutual interaction operation").

That is to say, in the case of the presentation device 14 performing a mutual interaction operation, for example the sensing unit 221 of the presentation device 14 senses the physical object (including the observer) existing in the periphery (observation environment), and supplies the physical object information as observation environment information to the simulation unit 204 of the reception device 13.

With the simulation unit 204 of the reception device 13, movement changes and shape modifications of the objects due to collision are simulated based on the observation environment information from the sensing unit 221, and the results thereof are supplied to the presentation device 14, via the presentation data generating unit 205.

Thus, the presentation device 14 can be caused to perform mutual interaction (such as a collision) with the physical objects (including the observer) existing in the periphery.

Also, for example, the sensing unit 221 of the presentation device 14 senses the lighting conditions in the observation environment, and supplies the information showing the lighting condition thereof as observation environment information to the simulation unit 204 of the reception device 13.

With the simulation unit 204 of the reception device 13, the image of the object under the lighting conditions of the observation environment is generated based on the observation environment information from the sensing unit 221, and supplied to the presentation device 14 via the presentation data generating unit 205.

Thus, the presentation device 14 can be caused to present an object with the lighting conditions in the observation environment.

Thus, in the case of presenting content with the presentation devices 14 which are prepared individually for each object, and each presentation device 14 presenting content based on the observation environment information obtained by sensing the observation environment, the observer in the observation environment or physical objects existing in the observation environment (such as furniture) and the content can be mutually interacting in a physical manner.

Note that the sensing unit 221 can be provided on the reception device 13 instead of the presentation device 14.

Also, with the present embodiment, the reception device 13 is provided separately from the presentation device 14, but an arrangement may be made wherein the reception device 13 is not provided separately from the presentation device 14, but the functions of the reception device 13 are built into each of the presentation devices 14 which are prepared individually for each object.

Further, a display serving as the image display unit which displays the images from the presentation device 14 may be a display to display an image on a flat screen, as well as a display which displays an image on a hemispherical screen (hereinafter also referred to as hemispherical display).

A hemispherical display is described in Japanese Unexamined Patent Application Publication No. 2005-070963, for example.

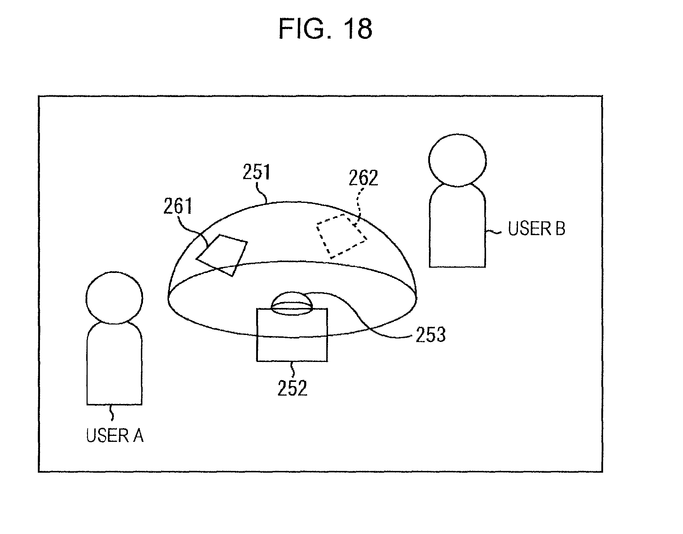

Fig. 18 is a perspective view, schematically showing the configuration example of a hemispherical display.

The hemispherical display is made up of a screen 251, image generating unit 252, and fish-eye lens 253.

The image generating unit 252 generates light corresponding to the image. The light generated by the image generating unit 252 is irradiated onto the screen 251 via the fish-eye lens 253.

The screen 251 is a large screen in a hemisphere shape, and is positioned so as to cover the image generating unit 252 and fish-eye lens 253. With the screen 251, the light irradiated via the fish-eye lens 253 is dispersed, whereby an image is displayed on the entire screen 251 which can be seen as of seeing a certain physical object from the periphery thereof.

With such a hemispherical display, an image which could likely be seen if actually seeing the physical object from the location of the user A is displayed on the display unit 261, which is a display region facing the user (observer) A in a certain location of the periphery of the screen 251, of the display region of the screen 251.

Also, for example, an image which could likely be seen if actually seeing the physical object from the location of the user B is displayed on the display unit 262, which is a display region of a portion of the screen 251, facing the location of the user B in a location on the opposite side from the location of the user A, with the screen 251 sandwiched therebetween.

With the above-described hemispherical display, multiple observers can readily perform content observation.

Next, the above-described series of processing can be performed with hardware or can be performed with software. In the case of performing the series of processing with software, the program making up the software thereof is installed on a general-use computer or the like.

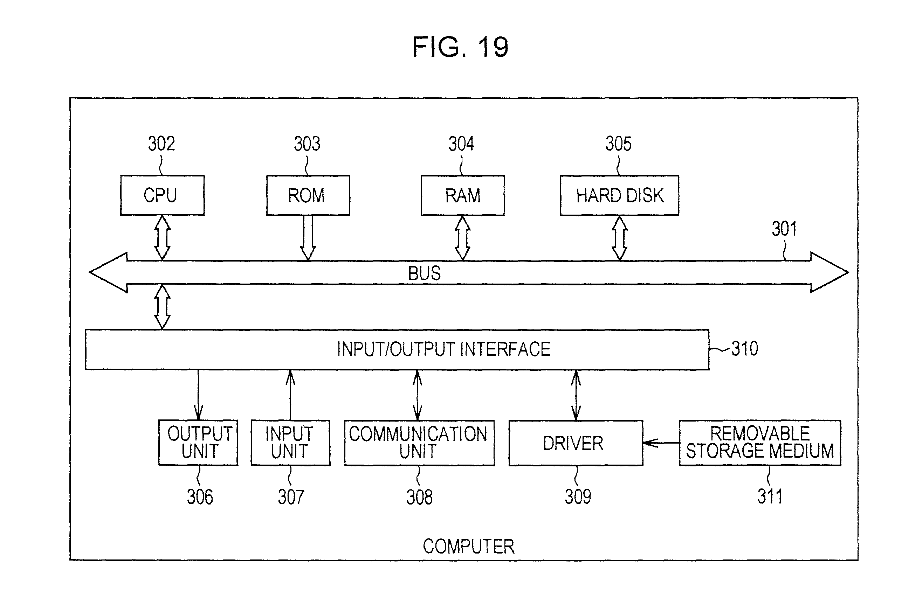

Fig. 19 shows a configuration example of an embodiment of the computer on which the program to execute the above-described series of processing is installed.

The program can be recorded beforehand on a hard disk 305 or ROM 303 serving as a recording medium built into the computer.

Alternatively, the program can be temporarily or permanently stores on a removable recording medium 311 such as a flexible disk, CD-ROM (Compact Disc Read Only Memory), MO (Magneto Optical) disk, DVD (Digital Versatile Disc), magnetic disk, semiconductor memory, and so forth. Such removable recording medium 311 can be provided as so-called packaged software.

Note that besides installing the program onto the computer from a removable recording medium 311 such as described above, the program can be transferred wirelessly to the computer from a download site via an artificial satellite for digital satellite broadcasting, or transferred by cable to the computer via a network such as a LAN (Local Area Network) or the Internet, whereby the program thus transferred is received with a communication unit 308 of the computer and installed in the built-in hard disk 305.

The computer has a CPU (Central Processing Unit) 302 built therein. The CPU 302 is connected to an input/output interface 310 via a bus 301, and upon the user inputting a command by operating an input unit 307 made up of a keyboard, mouse, microphone and so forth, the CPU 302 executes the program stored in the ROM (Read Only Memory) 303 in accordance thereto. Alternatively, the CPU 302 loads onto the RAM (Random Access Memory) 304 and executes a program stored in the hard disk 305, a program transferred from a satellite or network, received with the communication unit 308, and installed in the hard disk 305, or a program read out from the removable recording medium 311 mounted to the driver 309 and installed in the hard disk 305. Thus, the CPU 302 performs processing which is performed with the processing according to the above-described flowcharts or the configuration in the above-described block diagrams. The CPU 302 causes the processing results thereof to be output from the output unit 306 made up of an LCD (Liquid Crystal Display) or speakers via the input/output interface 310, or to be transmitted from the communication unit 308, recorded on the hard disk 305, or the like for example, as appropriate.

With the Present Specification, the invention is not restricted to the processing steps describing a program for a computer to perform various types of processing being processed in a time-series manner in the sequence described as the flowchart; rather, processing executed in parallel or individually (e.g. the parallel processing or processing by object) is also included.

Also, the program may be processed with one computer, or may be subject to distributed processing by multiple computers. Further, the program may be transferred to a remote computer and executed.

Note that with the above embodiment, the transmission/reception system shown in Fig. 1 has been described as a broadcast system, but the present invention is not restricted to this application, and is applicable to the transmission/reception of data other than for broadcasting, as well.

## Claims

1. A broadcast system including a transmission device to transmit data and a reception device to receive said data;
wherein said transmission device includes transmission means to transmit object information for each object used for content, as broadcast data;
and wherein said reception device includes generating means to generate content based on said object information.

2. The broadcast system according to Claim 1, wherein
said transmission means further transmit content default information, including time-series data relating to a state of said object, as broadcast data;
and wherein said generating means generate content based on said object information and said content default information.

3. The broadcast system according to Claim 2, wherein said generating means generate content based on processing information which is information relating to processing performed on said object, following instructions of a user viewing the content, and after processing of said object following instructions of said user, gradually transitioning the state of said object to a state based on said content default information.

4. The broadcast system according to Claim 2, wherein said generating means perform settings of at least placement, orientation, or lighting conditions, of said object, based on said content default information, and generate content following the settings.

5. The broadcast system according to Claim 2, wherein said generating means perform settings for a viewing position or orientation of at least a user as to a content, based on said content default information, and generate content following the settings.

6. The broadcast system according to Claim 1, wherein said generating means generate content based on processing information which is information relating to processing as to said object, following instructions of a user viewing the content.

7. The broadcast system according to Claim 1, wherein said generating means generate content according to the size of the presentation device to present the content.

8. The broadcast system according to Claim 7, wherein said generating means generate content so that the object presented with said presentation device becomes the size of the object in the real world, based on the size of said presentation device and the size of said object.

9. A transmission device to transmit data, making up a broadcast system along with a reception device to receive said data, said transmission device comprising:
transmission means to transmit object information for each object used for content, as broadcast data.

10. The transmission device according to Claim 9, wherein said transmission means further transmit content default information including time-series data relating to the state of said object, as broadcast data.

11. A transmission method for a transmission device to transmit data, making up a broadcast system along with a reception device to receive said data, said transmission method comprising:
a step for said transmission device to transmit object information for each object used for content, as broadcast data.

12. A program to cause a computer to function as a transmission device to transmit data, making up a broadcast system along with a reception device to receive said data, wherein the program causes the computer to function as transmission means to transmit object information for each object used for content, as broadcast data.

13. A reception device to receive data, making up a broadcast system along with a transmission device to transmit said data, said reception device comprising:
generating means to generate content based on said object information, in the case that said transmission device transmits object information for each object used for content as broadcast data.

14. The reception device according to Claim 13, wherein said transmission device further transmits content default information including time-series data relating to the state of said object, as broadcast data;
and wherein said generating means generate content based on said object information and said content default information.

15. The reception device according to Claim 14, wherein said generating means generate content based on processing information which is information relating to processing performed on said object, following instructions of a user viewing the content, and after processing of said object following instructions of said user, gradually transitioning the state of said object to a state based on said content default information.

16. The reception device according to Claim 14, wherein said generating means perform settings of at least placement, orientation, or lighting conditions, of said object, based on said content default information, and generate content following the settings.

17. The reception device according to Claim 14, wherein said generating means perform settings for a viewing position or orientation of at least a user as to a content, based on said content default information, and generate content following the settings.

18. The reception device according to Claim 13, wherein said generating means generate content based on processing information which is information relating to processing as to said object, following instructions of a user viewing the content.

19. The reception device according to Claim 13, wherein said generating means generate content according to the size of the presentation device to present the content.

20. The reception device according to Claim 19, wherein said generating means generate content so that the object presented with said presentation device becomes the size of the object in the real world, based on the size of said presentation device and the size of said object.

21. A reception method for a reception device to receive data, making up a broadcast system along with a transmission device to transmit said data, said reception method comprising:
a step of said reception device generating content based on object information, in the case that said transmission device transmits object information for each object used for content as broadcast data.

22. A program to cause a computer to function as a reception device to receive data, making up a broadcast system along with a transmission device to transmit said data, wherein the program causes the computer to function as generating means to generate content based on object information, in the case that said transmission device transmits object information for each object used for content as broadcast data.

23. A presentation device to present content generated based on data received from a reception device to receive data, making up a broadcast system along with a transmission device to transmit said data, said presentation device comprising:
presenting means to present content generated based on object information, in the case that said transmission device transmits object information for each object used for said content as broadcast data.

24. The presentation device according to Claim 23, further comprising:
sensing means to sense an observation environment wherein the presented content is observed;
wherein said presentation means present content generated based on said object information and the observation environment information relating to said observation environment sensed with said sensing means.

25. The presentation device according to Claim 24, further comprising:
moving means to move said presentation device;
wherein said presentation devices are prepared individually for each of said objects;
and wherein said moving means move said presentation device based on information expressing the position of said object in the generated content.

26. The presentation device according to Claim 25, wherein said sensing means sense a physical object existing in said observation environment.

27. The presentation device according to Claim 25, wherein said sensing means sense an lighting condition in said observation environment.

28. A presentation method for a presentation device to present content generated based on data received by a reception device to receive said data, making up a broadcast system along with a transmission device to transmit said data, said presentation method comprising:
a step of said presentation device presenting content generated based on object information, in the case of said transmission device transmitting object information for each object used for said content as broadcast data.

29. A program to cause a computer to function as a presentation device to present content generated based on data received by a reception device to receive said data, making up a broadcast system along with a transmission device to transmit said data, wherein the program causes the computer to function as presentation means to present content generated based on object information, in the case of said transmission device transmitting object information for each object used for content as broadcast data.

30. A recording medium in wherein the program according to any one of Claims 12, 22, and 29, is recorded.
